# EUROPÄISCHE PATENTSCHRIFT

(11) **EP 1 484 963 B1**
(45) Veröffentlichungstag und Bekanntmachung des Hinweises auf die Patenterteilung: **03.08.2005**
(21) Anmeldenummer: 03747393.1
(22) Anmeldetag: 30.04.2003
(51) Int. Cl.: A01K 13/00

(54) **GERÄT ZUR REINIGUNG UND PFLEGE VON HUNDEN, INSBESONDERE VON HUNDEPFOTEN**
DEVICE FOR CLEANING AND CARING FOR DOGS, PARTICULARLY DOG PAWS
DISPOSITIF POUR LAVER ET SOIGNER DES CHIENS, NOTAMMENT LEURS PATTES

(30) Priorität: 30.04.2002 DE 10219399; 24.03.2003 DE 10312975
(43) Veröffentlichungstag der Anmeldung: 15.12.2004
(73) Patentinhaber: Bestelmeyer, Margot, 82131 Gauting (DE)
(72) Erfinder: Bestelmeyer, Margot, 82131 Gauting (DE)
(74) Vertreter: Kramer Barske Schmidtchen
(86) Internationale Anmeldenummer: PCT/DE2003/001385
(87) Internationale Veröffentlichungsnummer: WO 2003/092366

(56) Entgegenhaltungen:
- CA-A- 1 192 105
- US-A- 2 719 307
- US-A1- 2002 112 670

## Beschreibung

Die Erfindung betrifft ein Verfahren zur Reinigung und Pflege von Hunden, insbesondere von Hundepfoten, in einem den Hund aufnehmenden, einen durchbrochenen Zwischenboden als Standfläche für den Hund aufweisenden, wannenartigen Becken, sowie ein Gerät zur Anwendung dieses Verfahrens.

Jeder Hund braucht einen täglichen Auslauf. Kehrt der Hundebesitzer mit seinem Hund von einem Spaziergang zurück, so müssen vor dem Betreten der Wohnung die Hundepfoten von anhaftendem Schmutz gereinigt werden. Diese Reinigung wird von Tierärzten auch deshalb empfohlen, weil die Pfoten durch die Rückstände von Streusalz angegriffen werden können. Die Pfotenreinigung ist umständlich und mühsam, so daß bereits vorgeschlagen wurde, hierzu ein Reinigungsgerät zu benutzen. Aus DE 298 07 717 U1 ist ein Gerät bekannt, bei dem sich in einem wannenartigen Behälter ein Zwischenboden befindet, der mit Schlitzen versehen ist, durch die unterhalb des Zwischenbodens um horizontale Achsen rotierbar gelagerte, in ein Wasserbad eintauchende Bürsten nach oben greifen.

Dieses Gerät hat den Nachteil, daß die rotierenden Bürsten vom Hund als unangenehm empfunden werden und daß er deshalb bestrebt ist, das Gerät zu verlassen, sobald die Bürstenrotation einsetzt. Außerdem verläßt der Hund das Gerät mit nassen Pfoten, was unerwünscht ist.

Es gibt zwar schon Tierwaschkabinen mit Trocknungsvorrichtung, diese Geräte sind aber nicht für die Pfotenreinigung geeignet, einerseits, weil sie spezielle Vorkehrungen zur Pfotenreinigung nicht aufweisen, andererseits, weil das ganze Tier mit Wasser behandelt wird und der Trocknungsvorgang, z.B. bei Hunden mit langhaarigem Fell, geraume Zeit in Anspruch nimmt. Für eine relativ schnelle Pfotenreinigung bei der Rückkehr nach jedem Verlassen der Wohnung ist der Aufwand viel zu groß, außerdem ist ein so häufiges Vollbad keineswegs der Gesundheit des Hundes dienlich, obwohl andererseits in vernünftigen Abständen eine vollständige Wäsche des Hundes durchaus sinnvoll ist. Insbesondere ist im veterinärmedizinischen Bereich ein Vollbad des Hundes oft erforderlich, um dem Bad zugesetzte Pflege- oder Arzneimittel durch das Fell hindurch auf die Hautoberfläche aufzubringen, wozu aber zusätzlich noch eine anstrengende Massage anzuwenden ist, damit diese Mittel das Fell durchdringen und tatsächlich bis zur Haut gelangen und möglichst alle Bereiche der Hautoberfläche zu erreichen, was aber auch mit einer gründlichen Massage keineswegs sichergestellt ist.

Nachdem Hunde die Angewohnheit haben, den Trocknungsvorgang zu beschleunigen, indem sie ihr durchnäßtes Fell heftig ausschütteln, nimmt eine Badevorrichtung wegen des erforderlichen Spritzschutzes wesentlich mehr Platz in Anspruch als eine Vorrichtung, die sich nur auf die Pfotenreinigung beschränkt. Für sie kann deshalb meist auch bei beschränkten Platzverhältnissen und vorzugsweise in der Nähe der Eingangstür ein geeigneter Platz finden.

Bei großen, schweren Hunden ist es schwierig und anstrengend, den Hund in das Becken hineinzuheben, zumal dann, wenn das Becken für ein Vollbad geeignet sein soll und der Beckenrand verhältnismäßig hoch liegt. Es kommt hinzu, daß Hunde in der Regel erschrecken, wenn sie unversehens mit dem ganzen Körper ins Wasser eingesetzt werden. Man hat deshalb bereits Badevorrichtungen mit einer Tür in der seitlichen Wandung vorgeschlagen und Becken, in denen nach dem Einsetzen des Hundes das Wasser allmählich zuläuft, bis der erforderliche Pegel erreicht ist. Das hat die Nachteile, daß es mehrere Minuten in Anspruch nimmt, bis das Becken gefüllt ist und daß das Wasser nach jedem Bad stets vollständig abgelassen werden muß und außerdem stellt eine verschließbare Öffnung in der Seitenwand des Beckens einen zusätzlichen konstruktiven Aufwand dar, der sich auch als hinderlich erweisen kann, wenn im Becken spezielle Reinigungs- oder Trocknungsvorrichtungen installiert werden sollen.

Es bestehen somit unterschiedliche Anforderungen je nachdem, ob nur die Pfoten eines Hundes gereinigt werden sollen, oder ob der Hund einem Vollbad unterzogen werden soll.

Für den Hundebesitzer ist es das vordringlichste Problem, gegebenenfalls mehrmals täglich die Pfoten des Hundes zu reinigen, wenn er in die Wohnung des Hundebesitzers zurückkehrt.

Der Erfindung liegt deshalb die Aufgabe zugrunde, ein vom Hund nicht unangenehm empfundenes, mit geringem Zeitaufwand und trotzdem gründlich wirkendes, weitgehend automatisch durchführbares Reinigungsverfahren, sowie eine zu dessen Durchführung geeignete Vorrichtung zu entwickeln, die vor allem auf die schnelle und wirksame Reinigung und Trocknung der Pfoten beschränkbar sind, wobei sie aber auch ausgestaltbarbar sein sollen für eine verbesserte Verabreichung von Vollbädern, gegebenenfalls auch zur veterinärmedizinischen Behandlung. Dabei soll insbesondere das zur Reinigung der Pfoten bestimmte Gerät keine besonderen Anforderungen hinsichtlich des Aufstellungsorts oder der Bedienung stellen, relativ kostengünstig herstellbar und betreibbar sein, wobei gegebenenfalls auch ein stufenweiser Ausbau zur Steigerung des Bedienungskomforts ermöglicht werden soll.

Erfindungsgemäß wird ein Verfahren zur Pflege, insbesondere Reinigung von Hunden in einem den Hund aufnehmenden, einen durchbrochenen Zwischenboden als Standfläche für den Hund aufweisenden, wannenartigen Becken derart ausgestaltet, daß das Becken so hoch mit Wasser gefüllt wird, daß sich die Pfoten eines auf den Zwischenboden gestellten Hundes während der Reinigung im Wasser befinden, daß durch ein Gebläse ein Luftversorgungssystem mit Druckluft beaufschlagt wird und aus einem unterhalb des Zwischenbodens angeordneten ersten Zweig des Luftversorgungssystems durch erste Luftausströmöffnungen Luft in das Wasser eingeblasen und verteilt wird, deren Druck ausreichend ist, um sprudelnd und ohne zu spritzen an den Pfoten anhaftenden Schmutz abzulösen, daß nach einer Reinigungsphase der Luftdruck im ersten Zweig, solang er in das Wasser eintaucht, zumindest auf einem Niveau aufrechterhalten wird, das ausreichend ist, das Eindringen von Schmutz in die Luftausströmöffnungen zu verhindern, und daß während einer Trocknungsphase ein mit wenigstens einer Austrittsöffnung für Trocknungsluft versehener zweiter Zweig des Luftversorgungssystems mit Luft versorgt wird .

Versuche haben gezeigt, daß ein solches Sprudelbad vom Hund ohne abwehrende Reaktion angenommen wird und daß normalerweise die Reinigungsphase maximal eine Minute in Anspruch nimmt und die Reinigungswirkung ohne besondere unterstützende Maßnahmen völlig zufriedenstellend ist.

Für die menschliche Körperpflege werden Sprudelbäder auch wegen ihrer physiologischen Wirkung seit langem empfohlen. Bekannt sind insbesondere mattenartige Einlagen für Badewannen, die an eine Luftversorgung angeschlossen werden können und über feine Ausströmöffnungen einen Sprudeleffekt erzielen. Diese Sprudelmatten sind aber ganz ausdrücklich nicht für Reinigungsbäder vorgesehen, vielmehr wird ausdrücklich verlangt, das vor einem Sprudelbad ein gründliches Reinigungsbad erforderlich ist, bei welchem sich die Sprudelmatte nicht in der Wanne befindet. Nach dem Reinigungsbad ist der Körper sorgfältig abzutrocknen, die Wanne ist einer gründlichen Säuberung zu unterziehen und erst dann darf die Sprudelmatte in die Wanne eingelegt und diese erneut mit Wasser angefüllt werden. Nach dem Sprudelbad muß auch die Sprudelmatte sorgfältig gereinigt werden.

Faßt man alle diese Anforderungen zusammen, so stellt ein Sprudelbad einen zeitaufwendigen Vorgang mit einem hohen Wasserverbrauch dar. Wollte man eine derartige Prozedur auf ein Verfahren zur Reinigung von Hundepfoten bei jeder Rückkehr des Hundes von einem Aufenthalt außerhalb des Hauses anwenden, würde wohl kaum ein Hundefreund den damit verbundenen Aufwand akzeptieren, vielmehr muß die Reinigung der Hundepfoten ohne großen Aufwand in etwa 2 bis 3 Minuten erledigt sein.

Der Grund für die bei der Anwendung von Sprudelmatten geforderte umständliche Prozedur ist darin zu sehen, daß Schmutzpartikel im Badewasser in die feinen Luftaustrittsöffnungen eindringen und den Luftweg verstopfen können. Es wurde deshalb für unmöglich angesehen, ein Sprudelbad zugleich als Reinigungsbad anzuwenden. Die Erfindung macht sich zunutze, daß die durch die Luftaustrittsöffnungen ausströmende Luft das Eindringen von Schmutz in den Öffnungsquerschnitt verhindert, weshalb diese Luftströmung zumindest solang aufrechterhalten wird, wie sich die Öffnungen im Wasser befinden. Vorzugsweise wird aber der Luftdruck im ersten Zweig noch während einer für die Trocknung des Öffnungsbereichs ausreichenden Nachlaufzeit aufrechterhalten, nachdem die Benetzung des ersten Zweigs durch das Wasser beendet ist.

Da für das Sprudelbad ein Gebläse vorhanden ist, kann in besonders einfacher und zweckmäßiger Weise die Trocknung der Hundepfoten oder anderer aufgrund des Reinigungsvorgangs noch feuchter Körperpartien durch Trocknungsluft aus dem zweiten Zweig des Luftversorgungssystems bewirkt werden. Die Aufteilung des Luftversorgungssystems in zwei Zweige ermöglicht es, Sprudelbad und Trocknung getrennt zu steuern. Wenn der apparative Aufwand gering gehalten werden soll, ist es ausreichend, daß die Luft aus dem zweiten Zweig über einen von Hand führbaren Luftschlauch austritt. Dabei kann der Hund auch außerhalb des wannenartigen Beckens mit dem aus dem Luftschlauch austretenden Luftstrom getrocknet werden. Es kann nach einer vorteilhaften Ausgestaltung aber auch während der Trocknungsphase der Zwischenboden mit dem Hund über die Wasseroberfläche angehoben werden, was es zugleich ohne zusätzlichen Platzbedarf ermöglicht, gering verschmutztes Wasser im Becken zu belassen und für die nächste Pfotenreinigung wiederzuverwenden. Das ist deshalb möglich, weil der die Luftaustrittsöffnungen für das Sprudelbad aufweisende Teil des ersten Zweigs des Luftversorgungssystems zusammen mit dem Zwischenboden aus dem Wasser gehoben wird und dort bis zum nächsten Reinigungsvorgang verbleibt, so daß die Ausblasöffnungen keiner Verstopfungsgefahr ausgesetzt sind.

Es kann aber auch nach der Reinigungsphase das Becken entleert werden und danach während der Trocknungsphase der Hund innerhalb des Beckens mit dem aus dem Luftschlauch austretenden Luftstrom getrocknet werden. Da die ganze, Reinigung und Trocknung umfassende Prozedur rasch und mühelos ablaufen soll, sollte in diesem Fall auch die Entleerung des Beckens möglichst schnell vonstatten gehen, was einerseits durch eine vorzugsweise mit einem Schmutzfilter versehene Förderpumpe erfolgen kann, die das Wasser aus dem Becken abzieht, während andererseits der Ausflußquerschnitt entsprechend groß bemessen werden sollte.

Eine vorteilhafte Ausgestaltung des Verfahrens besteht darin, daß während der Reinigungsphase über eine zu- und abschaltbare Förderpumpe Wasser aus dem Becken abgezogen und vorzugsweise nach dem Durchlaufen eines Schmutzfilters mit so ausreichendem Druck einem von Hand führbaren Wasserschlauch zugeführt wird, daß es als Spülstrahl aus diesem Schlauch austritt, der dann gegen stark verschmutzte Körperpartien des Hundes gerichtet werden kann. In den eher seltenen Fällen, in denen beispielsweise auch der Bauch des Hundes einer Reinigung bedarf, kann dies mittels des Wasserschlauchs geschehen. Die Förderpumpe kann aber auch zur Entleerung des Beckens eingesetzt werden, worauf der Hund im Becken getrocknet werden kann. Dies kann durch den Luftschlauch geschehen. Bleibt der Hund zur Trocknung im entleerten Becken, wird zweckmäßigerweise auch während der Trocknungsphase der Luftaustritt aus dem ersten Zweig aufrechterhalten, so daß der Hund durch den aufsteigenden Luftstrom getrocknet wird, wobei insbesondere der von unten gegen die Pfoten gerichtete Luftstrom nützlich ist.

Vorzugsweise wird während der Reinigungsphase das Wasser ständig durch eine Umwälzpumpe in einem über einen Schmutzfilter führenden Kreislauf gehalten

Eine sehr vorteilhafte Möglichkeit besteht dann darin, daß während der Trocknungsphase der über den ersten Zweig zuströmenden Luft dosiert ein Pflegemittel für die Pfoten beigemischt wird.

Eine weitere zweckmäßige Ausgestaltung besteht darin, daß während der Trocknungsphase die Luft aus dem zweiten Zweig durch im oberen Bereich der Seitenwände des Beckens angeordnete, nach innen und schräg abwärts gerichtete Ausströmöffnungen ausgeblasen wird, wodurch die Feuchtigkeit nach unten verdrängt wird und die Trocknung so wirksam unterstützt wird, daß gegebenenfalls auf den zusätzlichen Einsatz des Luftschlauchs verzichtet werden kann.

Besonders vorteilhaft ist es, wenn die vom Gebläse geförderte Luft beheizt wird. Dies ist nicht nur für den Einsatz der Gebläseluft zur Trocknung, sondern auch zur Temperierung des Sprudelbads zweckmäßig.

Um den Wasserverbrauch auch dann zu reduzieren, wenn vor der Trock-nungsphase das Becken entleert wird, besteht eine besonders vorteilhafte Ausgestaltung des - Verfahrens darin, daß das Becken über eine verschließbare Schnellentleeröffnung in einen Sammelbehälter entleert wird und die Förderpumpe zur Füllung des Beckens oder den Gebrauch des Wasserschlauchs Wasser aus dem Sammelbehälter ansaugt. Dadurch kann die Entleerung noch schneller erfolgen als durch die Förderpumpe.

Zur Durchführung des Verfahrens wird erfindungsgemäß ein Gerät zur Reinigung von Hundepfoten mit einem einen Boden und eine sich von diesem Boden nach oben erstreckende Seitenwandung aufweisenden, wannenartigen Becken und mit einem durchbrochenen Zwischenboden als Standfläche für den zu reinigenden Hund innerhalb des von diesem Becken umschlossenen Raums mit einem vertikalen Abstand vom Beckenboden so ausgestaltet, daß unterhalb des Zwischenbodens ein erster Zweig eines mit einem steuerbaren Gebläse verbundenen Luftversorgungssystems angeordnet ist, das mit über die Grundfläche verteilten, seitwärts und/oder abwärts gerichteten Luftaustrittsöffnungen versehen ist, die vorzugsweise nach beiden Seiten schräg abwärts gerichtet sind.

Der im Wasser gelöste Schmutz hat, soweit er sich aus dem Wasser abscheidet, die Tendenz, sich entweder an der Wasseroberfläche zu sammeln oder auf den Boden abzusinken. Einer Verstopfung der Luftaustrittsöffnungen des im Wasser befindlichen Sprudelsystems wird dadurch vorgebeugt, daß die Luftaustrittsöffnungen nach der Seite oder nach unten gerichtet sind, so daß Ablagerungen allenfalls auf der von den Öffnungen abgelegenen Oberseite der Luftleitung auftreten können. Nachdem verfahrensgemäß der Luftaustritt durch die Öffnungen wenigstens solang aufrechterhalten wird, wie die Öffnungen vom Wasser umspült werden, werden auch dadurch die Luftaustrittsöffnungen vor Verstopfung bewahrt.

Da je nach Statur und Haltung des Hundes dessen Pfoten sich an sehr unterschiedlichen Stellen des Zwischenbodens befinden können, muß eine möglichst gleichmäßig über die Fläche verteilte Sprudelwirkung erzielt werden, weshalb die Luftaustrittsöffnungen nach beiden Seiten und gegebenenfalls schräg abwärts gerichtet sind, wodurch sich die aufsteigende Luft gleichmäßiger im Wasser verteilt.

Wenn die Pfoten nur gering verschmutzt sind, kann die Füllung des Beckens für mehrere Reinigungsvorgänge verwendet werden. Um einer Verstopfung der Luftausströmöffnungen vorzubeugen, darf der diese Öffnungen aufweisende Bereich des ersten Zweigs nach der Reinigungsphase nicht im Wasser verbleiben. Die Ableitung des Wassers in einen Sammelbehälter stellt eine vorteilhafte Lösung dieses Problems dar. Besonders vorteilhaft ist es, wenn es die räumlichen Gegebenheiten, aber auch die Größe des Hundes, erlauben, den Sammelbehälter tiefer zu legen als das Becken, so daß das Wasser aufgrund des Gefälles rasch ablaufen kann.

Nach einer sehr zweckmäßigen Ausgestaltung ist das Gerät mit einem von Hand führbaren Wasserschlauch versehen, der über einen Schmutzfilter und eine zu- und abschaltbare Förderpumpe aus dem im Gerät befindlichen Reinigungswasser mit Spülwasser versorgbar ist. Vorzugsweise ist das Becken in einen Kreislauf einbezogen, der über eine Umwälzpumpe und einen Schmutzfilter führt.

Die vom Gebläse geförderte Luft wird auch für die Trocknung eingesetzt, weshalb sie nach einer zweckmäßigen Ausgestaltung beheizt wird, um eine schnellere Trocknung zu erzielen. Erfahrungsgemäß ist für die Reinigungsphase maximal eine Dauer von 1 Minute zu veranschlagen. Es ist deshalb zur Vereinfachung des Geräts oder auch seiner Bedienung zweckmäßig, daß Gebläse und Heizvorrichtung gemeinsam ein- und ausschaltbar sind, zumal dann die Luft auch das Wasser temperieren kann, außerdem wird dadurch nach Beendigung der Reinigungsphase die Luft bereits die für die Trocknungsphase vorgesehene Temperatur aufweisen. Andererseits sollte die Trocknungsluft erst austreten, wenn dies gewünscht wird, weshalb vorzugsweise mit dem Gebläse ein zweiter, der Trocknung dienender, gesondert zu- und abschaltbarer Zweig des Luftversorgungssystems verbunden ist.

Wenn das Becken nach der Reinigungsphase geleert wird und der Hund für die Trocknungsphase im Becken bleibt, kann die Trocknung durch die aus dem ersten Zweig austretende Luft zumindest unterstützt werden und in Verbindung mit der vorteilhaften Ausgestaltung, nach der der zweite Zweig des Luftversorgungssystems im oberen Bereich der Innenseite der Seitenwandung des Beckens angeordnete, schräg abwärts gerichtete, zweite Luftauströmöffnungen aufweist, kann eine so ausreichende Trocknungswirkung erreicht werden, daß auf die zusätzliche Trocknung mit einem von Hand führbaren, wahlweise mit Luft beaufschlagbaren Luftschlauch verzichtet werden kann, um in besonderen Fällen eine zusätzliche Trocknung zu ermöglichen. Insgesamt ist diese Ausstattungsvariante sehr komfortabel. Dabei ist nach einer zweckmäßigen Ausgestaltung zur Anpassung an die Größe des Hundes der die zweiten Luftaustrittsöffnungen aufweisende Abschnitt als längs des Umfangs des Beckens verlaufender, höhenverstellbarer Rahmen ausgebildet.

Bei der Ausgestaltung des Mündungsbereichs des Luftschlauchs sollte darauf geachtet werden, daß die ausströmende Luft keine Geräusche verursacht, die den Hund verängstigen können.

Von Vorteil ist es, wenn mit dem ersten Zweig des Luftversorgungssystems eine Dosiervorrichtung zur Abgabe eines Zusatzmittels in die Luftströmung verbunden ist, wobei vorzugsweise die Verbindung der Dosiervorrichtung mit dem ersten Zweig des Luftversorgungssystems zu und abschaltbar ist.

Wenn zur Reinigung der Wasserschlauch eingesetzt wird, kann es sein, daß wegen des erforderlichen Zugriffs in den Beckenbereich der Rand des Beckens nicht weit genug nach gelegt werden kann, um Wasserspritzer auf die Umgebung zu verhindern, zumal mit Rücksicht auf die Zugänglichkeit des Beckens für größere Hunde ohne die Verwendung einer Einstiegshilfe die mögliche Höhe des Beckenrandes beschränkt ist. In diesem Falle hilft eine weitere zweckmäßige Ausgestaltung, wonach auf die Oberkante der Seitenwand des Beckens eine abnehmbare Spritzschutzwand aufsetzbar ist, die mit einer Abweismanschette den inneren Randbereich der Seitenwand übergreift.

Um auch bei einer einfachen und kostengünstigen Ausführungsform des Geräts ohne zusätzlichen Sammelbehälter das Wasser für mehrere Reinigungsvorgänge nutzen zu können, besteht eine sehr vorteilhafte Ausbildung darin, daß dem Zwischenboden eine Hubvorrichtung zugeordnet ist, die geeignet ist, den Zwischenboden zusammen mit dem unter diesem angeordneten ersten Zweig des Luftversorgungssystems aus seiner der Reinigungsphase zugeordneten Grundstellung in eine der Trocknungsphase zugeordnete Stellung oberhalb des Wasserspiegels anzuheben und dort zeitweilig festzuhalten, so daß die Luftaustrittsöffnung sich außerhalb des Wassers befinden.

Um den Hund daran zu hindern, sich während des Aufenthalts im Becken umzuwenden, kann nach einer zweckmäßigen Ausgestaltung oberhalb des Zwischenbodens in der Längsmitte des Beckens eine in der Höhe auf die Körpergröße des Hundes abgestimmte Trennwand anbringbar sein.

Für die Trocknung im entleerten Reinigungsbehälter wird zweckmäßigerweise auch die zur Erzeugung des Sprudelbades eingesetzte Luft benützt, weshalb eine weitere zweckmäßige Ausgestaltung darin besteht, daß stromab vom Gebläse ein Umschaltventil angeordnet ist, das in einer ersten Stellung das Gebläse allein mit dem ersten Zweig und in einer zweiten Stellung das Gebläse mit dem ersten und dem zweiten Zweig verbindet.

Um dem Benutzer des Geräts dessen Gebrauch möglichst zu erleichtern, was insbesondere dann von Vorteil ist, wenn - z.B. in Beherbergungsbetrieben - einem mit dem Gebrauch des Gerätes noch nicht vertrauten Gast die Benutzung des Geräts empfohlen wird, sollte der Benutzer möglichst weitgehend von steuernden Eingriffen in den Funktionsablauf entlastet werden. Es ist deshalb - insbesondere wenn nach einer möglichen Ausführungsform die Entleerungsöffnung das Becken mit einem Sammelbehälter verbindet, oder wenn bei entsprechenden räumlichen Voraussetzungen und gegebenem Bedarf das Gerät mit einer fest installierten Wasserver- und -entsorgung verbunden ist - einem Fachmann unter Nutzung der handelsüblichen Schaltungstechnik problemlos möglich, das Gerät mit einer Steuerschaltung zu versehen, die geeignet ist, einen vorgebbaren automatischen Ablauf von Steuerfunktionen zu ermöglichen, wobei vorzugsweise die Steuerschaltung zumindest Zeitglieder zur Bemessung der Reinigungsphase und der Trocknungsphase enthalten sollte. Es kann dann beispielsweise entsprechend der Hundegröße ein bestimmtes Programm gewählt werden, wenn der Hund in das Becken gestellt wurde, worauf die Reinigungsphase und die Trocknungsphase automatisch ablaufen und der Hund nach Programmende nur noch aus dem Becken entnommen werden muß. Dabei können für Sonderfälle Wahltasten vorgesehen sein, um die Benutzung des Wasserschlauchs oder des Luftschlauchs zu ermöglichen, oder aber eine Schaltung, die es ermöglicht, aufgrund eines Parameters, wie etwa der Wassertrübung, bei Bedarf das Wasser aus dem Sammelbehälter zu entsorgen und durch Frischwasser zu ersetzen, wobei zwischen beiden Vorgängen wenigstens ein Spülvorgang für den Sammelbehälter eingefügt werden kann.

Für die Steuerung des Geräts ist es eine zweckmäßige Ausgestaltung, wenn es mit einem Füllstandssensor versehen ist, der geeignet ist, beim Erreichen einer einstellbaren maximalen Füllhöhe im Becken ein erstes Signal und nach dem Verlassen dieser maximalen Füllhöhe ein zweites Signal abzugeben, sobald der entleerte Zustand des Beckens erreicht ist.

Vorzugsweise ist der Füllstandssensor zur Signalübertragung mit einer Steuerschaltung verbunden ist, die geeignet ist, entsprechend den vom Füllstandssensor und von einem einstellbaren Zeitschaltglied erhaltenen Signalen zumindest das Gebläse, gegebenenfalls die Heizung, die Dauer der Reinigungs- und der Trocknungsphase und gegebenenfalls die Funktion der Förderpumpe zur Befüllung bzw. Entleerung des Beckens zu steuern.

Eine sehr empfehlenswerte Ausgestaltung besteht darin, einen dem Zwischenboden zugeordneten Sensor vorzusehen, der geeignet ist, bei einer Annäherung von Wasseroberfläche und Zwischenboden ein Signal abzugeben, bevor die Luftaustrittsöffnungen des ersten Zweigs in das Wasser eintauchen, und durch das Signal die Luftbeaufschlagung des ersten Zweigs einzuschalten. Es wird damit der Verschmutzung der Öffnungen vorgebeugt.

Eine weitere zweckmäßige Weiterbildung besteht darin, daß die Steuerschaltung geeignet ist, nach Beendigung der Reinigungsphase das Umschaltventil in seine Stellung zur Versorgung des zweiten Zweigs und vor Beginn der Reinigungsphase in seine andere Stellung umzuschalten.

Besonders förderlich für eine gleichmäßige Ausbildung des Sprudelbads ist es, daß der Zwischenboden aus einer Durchbrechungen für den Luftdurchtritt aufweisenden Plattform besteht, an deren Unterseite mit Abstand von ihr ein die Luftaustrittsöffnungen aufweisender Bereich des ersten Zweig des Luftversorgungssystems angeordnet ist, der zueinander parallele Leitungsabschnitte mit seitwärts und/oder schräg abwärts gerichteten Luftaustrittsöffnungen umfaßt.

Um mit geringem Fertigungsaufwand Geräte mit unterschiedlicher Grundfläche des Beckens herstellen zu können, ist es eine zweckmäßige Ausgestaltung, daß der Zwischenboden aus einer Gruppe von zueinander parallelen Bodenelementen zusammengesetzt ist.

Bei beengten Platzverhältnissen, aber auch aus Sicherheitsgründen kann es sich als vorteilhaft erweisen, daß nach einer Variante das Gebläse mit Heizung, und gegebenenfalls Steuer-, Anzeige- und Eingabeelemente zu einer Baugruppe zusammengefaßt sind, die über Versorgungs-, Entsorgungs- und Steuerleitungen mit dem Becken und seinen Elementen verbindbar ist.

Sehr zweckmäßig für Wartung und Reinigung ist es, wenn der Zwischenboden mit dem ihm zugeordneten, die Luftaustrittsöffnungen aufweisenden Teil des Luftversorgungssystems und gegebenenfalls der Hubvorrichtung herausnehmbar im Becken angeordnet sind, wobei sie - soweit es die jeweilige Ausführung und Dimensionierung erlaubt - auch zu gemeinsam herausnehmbaren Einheiten zusammengefaßt sein können.

Es hat sich gezeigt, daß wesentliche Merkmale der Erfindung mit beachtlich vorteilhafter Wirkung auch beim Baden von Hunden, sei es zur Reinigung, sei es zur veterinärmedizinischen Behandlung, angewandt werden können. Das sprudelnde Wasser, das ohne weitere Unterstützung in relativ kurzer Zeit eine gründliche Reinigung der Pfoten ermöglicht, durchdringt auch das Fell des Hundes und hebt dessen Haare von der Haut ab, und ist somit geeignet, dem Wasser beigemischte Pflege- oder Arzneimittel ohne die bisher erforderliche Massage zuverlässiger, gleichmäßiger und auch an schwer zugänglichen Stellen auf der Haut zu verteilen. Die vertikale Beweglichkeit des Zwischenbodens, die bei der Vorrichtung zur Reinigung der Pfoten vor allem den Vorteil bietet, daß die Wasserfüllung des Beckens nicht nach jedem Reinigungsvorgang erneuert werden muß, weil mit dem Zwischenboden auch die Luftaustrittsöffnungen für das Sprudelbad aus dem Wasser herausgehoben werden, so daß nach dem Abschalten des Gebläses keine Verstopfung der Öffnungen befürchtet werden muß, kann den Badevorgang insbesondere bei großen Hunden wesentlich erleichtern, weil der Hund. z.B. über eine Rampe oder Treppe leicht den angehobenen Zwischenboden erreichen bzw. verlassen kann, welcher mit dem Hund durch einen geeigneten Hubantrieb in das entsprechend der Größe des Hundes befüllte Becken abgesenkt und nach dem Bad wieder mit dem Hund in die Ausgangsstellung angehoben wird. Damit ergeben sich folgende Vorteile. Das Becken kann gefüllt werden, bevor das Bad beginnt. Bei großen Hunden kann eine Beckenfüllung zwei- bis dreihundert Liter Wasser erfordern, was eine Füllzeit von bis zu zehn Minuten bedeutet. Der Hund sich nur während der eigentlichen Badezeit von etwa zwei Minuten im Becken aufhalten und wird dann wieder aus dem Becken herausgehoben werden. Es wird somit vermieden, daß der Hund sich unnötig lang im Wasser aufhält. Das Gebläse für das Sprudelbad wird jeweils automatisch eingeschaltet, bevor der Zwischenboden aus seiner oberen, außerhalb des Füllbereichs des Beckens befindlichen Endstellung abgesenkt wird, um ein Verstopfen der Ausblasöffnungen für das Sprudelbad nach dem Eintauchen zu verhindern. Der Hund taucht allmählich in das Wasser ein und wird nicht verschreckt. Es erfordert keinerlei körperliche Anstrengung, selbst Hunde mit einem Körpergewicht von 80 kg und mehr in das Becken zu bringen und nach dem Bad aus dem Becken herauszunehmen.

Für veterinärmedizinische Anwendungen muß von der maximalen Hundegröße ausgegangen werden, so daß das Beckeninnenmaß etwa eine Länge von 900 mm, eine Breite von 500 mm und eine Höhe von 800 mm aufweisen sollte. Für Geräte dieser Größe und Belastung ist der bereits beschriebene Hebelmechanismus für die Vertikalbewegung des Zwischenbodens weniger geeignet. Es besteht deshalb eine vorteilhafte Ausgestaltung darin, daß in dem im Grundriß im wesentlichen rechteckigen Becken in den vier Ecken durch einen zentralen Antrieb synchron vertikal auf und ab bewegliche Hubelemente für den Zwischenboden angeordnet sind.

Eine vorteilhafte Ausgestaltung des Hubantriebs besteht darin, daß in den vier Ecken des Beckens vertikal angeordnete, drehantreibbare Gewindespindeln angeordnet sind, die jeweils in eine fest mit einem Tragrahmen für den Zwischenboden verbundene Mutter eingreifen. Zum Antrieb der Gewindespindeln trägt jede vorzugsweise im Bereich ihres oberen Endes ein Kettenrad, wobei diese Kettenräder durch eine endlosen Kette in Antriebsverbindung stehen. Ein Antriebselement, vorzugsweise ein motorischer Antrieb, ist einer der Gewindespindeln zugeordnet. Eine kostengünstige Ausführungsform verwendet selbstreinigende gerollte Gewindespindeln, die mit Kunststoffmuttern in Eingriff stehen können. Die Kettenräder und die sie verbindende Kette werden von einer Abdeckhaube überdeckt, die den oberen Beckenrand übergreift.

Insbesondere dann, wenn es erwünscht ist, der Versorgung und/oder Steuerung des Geräts dienende Bauteile, wie Pumpe, Gebläse, Steuerungselektronik, und/oder eine Spritzschutzhaube oder dergl. in ausreichendem Abstand oberhalb des Beckens anzubringen und dafür im Bereich der Beckenwandung Stützelemente für diese Bauteile anzuordnen, besteht eine andere Ausgestaltung darin, daß in den vier Ecken des Beckens einander paarweise zugeordnete, vertikale Säulen angeordnet sind, daß sich zwischen den beiden Säulen eines Paars jeweils durch das Becken ein horizontaler Stab erstreckt, der an einem an der Säule durch einen Antrieb vertikal auf und ab beweglichen Element befestigt ist, wobei die beiden Elemente eines jeden Paars mit dem Antrieb derart gekoppelt sind, daß sich die beiden parallelen Stäbe jeweils in der gleichen Höhe befinden, und daß der Zwischenboden an seinen den Stäben zugewandten Seiten zur lösbaren Auflagerung auf jeweils einem der Stäbe vorbereitet ist. Der Antrieb kann von Hand, z.B. durch eine vorzugsweise untersetzte Kurbel, oder motorisch erfolgen. Nach einer zweckmäßigen Ausgestaltung sind die Säulen als im Querschnitt rechteckige Hohlprofile gestaltet, in deren Innerem eine mit einem Antriebsritzel in Eingriff stehende Zahnstange auf und ab gleiten kann, wobei die Enden eines jeden Stabes durch einen Vertikalschlitz im Hohlprofil in die beiden ihm zugeordneten Säulen eingreift und dort mit der Zahnstange fest verbunden ist. Der Antrieb ist einer der Säulen zugeordnet und mit Mitteln zur schlupffreien Bewegungsübertragung mit den Antriebsritzeln an den anderen Säulen verbunden. Es ergibt sich dadurch eine sehr stabile, und verkantungsfreie Führung für den Zwischenboden.

Der Hund hat die Neigung, sich von der Nässe durch kräftiges Schütteln zu befreien, sobald er das Wasser verlassen hat. Es ist deshalb vorzugsweise ein Spritzschutz vorgesehen, der den Bereich oberhalb des Beckenrandes abschirmt, wenn der Hund mit dem Zwischenboden nach oben aus dem Wasser herausgehoben wird. Hierzu können die Zahnstangen beispielsweise jeweils an ihrem oberen Ende mit einer durch den Schlitz hindurchgreifenden Halterung für einen lösbar mit ihnen verbindbaren Spritzschutz versehen sein, der während des Bades von den Halterungen gelöst und vollständig abgesenkt werden kann, um den Zugriff auf den Hund nicht zu behindern. Vor dem Heben des Zwischenbodens wird der Spritzschutz mit der Halterung verbunden und dann von den Zahnstangen nach oben gezogen.

Bei der Ausführungsform mit Gewindespindeln kann ein Spritzschutz mit einem Haltebügel lösbar verbindbar und der Haltebügel am vertikal beweglichen Tragrahmen derart lösbar befestigt sein, daß er in dessen tiefster Stellung bis in den Bereich des Bekkenrandes abgesenkt ist.

Wenn ein großer Hund nach Beendigung des Bads nicht sehr schnell das Wasser verläßt, sei es durch Schnellentleerung des Beckens, sei durch rasches Anheben des Zwischenbodens, können beim Schütteln des Hundes trotz Spritzschutz beträchtliche Wassermengen in die Umgebung des Beckens geschleudert werden. Dies läßt sich verhindern, wenn eine geschlossene Abdeckhaube vorgesehen wird, die bei Beendigung des Bades den Bereich oberhalb des Beckenrandes abdeckt und zugleich genügend Platz bietet, um den aus dem Wasser gehobenen Hund aufzunehmen. Im Gegensatz zu der Konstruktion mit Zahnstangen, die sich beim Anheben des Zwischenbodens nach oben aus dem Becken schieben und deren Führungen daher über den Beckenrand nach oben ragen, nehmen die Spindeln keinen Raum oberhalb des Beckens in Anspruch, weshalb in letzterem Fall die Anbringung einer solchen Abdeckhaube besonders einfach möglich ist.

Es kann aber auch an einer als Spritzschutz dienenden, über den Beckenrand nach oben ragenden Rückwand des Geräts eine mit scherenartig horizontal ausfahrbaren Armen spreizbare, und mit schürzenartigen Seitenelementen versehene Abdeckung angeordnet sein.

Da im veterinärmedizinischen Anwendungsbereich für jeden zu behandelnden Hund ein frisches Bad vorbereitet werden muß und der Pegelstand - bezogen auf die Badeposition des Zwischenbodens - je nach Größe des zu behandelnden Hundes beträchtlich schwankt, ist es aus wirtschaftlichen Gründen zweckmäßig, für alle Hundegrößen eine einheitliche Badeposition des Zwischenbodens vorzusehen, nämlich die betriebstechnisch mögliche unterste Position des Zwischenbodens. Dadurch wird das Gerät mit der jeweils benötigten Minimalfüllmenge benutzt. Bei größeren Hunden erfordert das Befüllen geraume Zeit, weshalb es vorteilhaft ist, den Füllvorgang automatisch zu beenden, wenn die vorgegebene Füllmenge erreicht ist. Hierzu besteht eine bevorzugte Ausgestaltung darin, daß eine dem Becken zugeordneten Fülleitung ein Sperrventil enthält, das durch einen gemeinsam mit dem Tragrahmen beweglichen Sensor in Sperrstellung schaltbar ist, sobald der Sensor in Wasser eintaucht und daß am vertikal beweglichen Geräteteil einerseits und am feststehenden Geräteteil andererseits einander zugeordnete Markierungen angebracht sind, an denen der der jeweiligen Sensorposition entsprechende Wasserstand ablesbar ist.

Dies ermöglicht es, den Zwischenboden vor dem Füllvorgang so zu positionieren, daß der Füllvorgang automatisch beendet wird, wenn der gewünschte Wasserstand erreicht ist. Dabei ist die Schaltung des Sperrventils derart ausgestaltet, daß dieses nach der vom Sensor ausgelösten Überführung in die Sperrstellung geschlossen bleibt, bis es durch einen wilikürlichen Steuerbefehl wieder zur Öffnung freigegeben wird.. Dadurch bleibt das Sperrventil geschlossen, wenn der Zwischenboden über seine den Pegelstand markierenden Position angehoben wird, wie etwa zur Übernahme des Hundes in seiner oberen Endstellung.

Es muß damit gerechnet werden, daß in der veterinärmedizinischen Praxis auch verschmutzte Hunde behandelt werden müssen, so daß gegebenenfalls der Behandlung durch ein therapeutisches Bad ein Reinigungsbad vorgeschaltet werden muß. Um die bei großen Hunden mit großen Zeit- und Wasseraufwand verbundene Füllung des Beckens nicht zweimal vornehmen zu müssen, ist es zweckmäßig, das Gerät mit einer Einrichtung zum Abbrausen des Hundes auszustatten. Dies kann ein über die Pumpe versorgter Schlauch mit Brausedüse sein, vorteilhaft ist eine fest installierten Brausevorrichtung, die zwei auf unterschiedlichem Niveau jeweils in einer horizontalen Ebene längs der Beckenwandung verlaufende Ringleitungen umfaßt, wobei die untere Ringleitung mit schräg aufwärts, die obere Ringleitung mit schräg abwärts gerichteten Sprühdüsen versehen ist. Eine solcher Brausevorrichtung ist insbesondere auch dann vorteilhaft einzusetzen, wenn der Hund nach dem therapeutischen Bad von Rückständen der eingesetzten Behandlungsmittel gesäubert werden soll, weil dadurch das Fell nach dem Ablassen des Bades automatisch gründlich gesäubert wird.

Vorzugsweise ist gemeinsam mit dem Tragrahmen ein zweiter auf die Wasserfüllung ansprechender Sensor beweglich, der geeignet ist, die Beaufschlagung der Luftausströmöffnungen mit Gebläseluft zuzuschalten, bevor bei der Abwärtsbewegung des Tragrahmens die Luftaustrittsöffnungen in die Wasserfüllung des Beckens eintauchen. Damit wird sichergestellt, daß eine Verschmutzung der Luftaustrittsöffnungen zuverlässig verhindert wird

Diese und weitere vorteilhafte Merkmale der Erfindung werden anhand der nun folgenden Beschreibung der in der Zeichnung schematisch dargestellten Ausführungsbeispiele der Erfindung näher erläutert.

Es zeigt:
- Fig. 1: einen auf die wesentlichen Merkmale beschränkten, schematischen Längsschnitt durch ein zur Reinigung von Hundepfoten bestimmtes erfindungsgemäßes Gerät,
- Fig. 2: eine Draufsicht auf das Gerrät nach Fig. 1
- Fig. 3a: einen schematischen Schnitt ähnlich Fig. 1 durch ein Gerät mit höhenverstellbarem Zwischenboden in Reinigungsstellung,
- Fig. 3b: einen Schnitt durch das Gerät nach Fig.3a in Trocknungs- und Ruhestellung,
- Fig. 4: eine schematische Schaltung für die Wasserver- und -entsorgung des Geräts,
- Fig.5: eine schematische Schaltung der Luftversorgung einer komfortabel ausgestatteten Variante des Geräts,
- Fig. 6: eine schematische Draufsicht zur Darstellung der Position einer Trennwand und eines Füllstandsensors,
- Fig. 6a: eine schematische Darstellung des Füllstandssensors bei maximaler Füllung,
- Fig. 6b: eine schematische Darstellung des Füllstandssensors bei entleertem Behälter,
- Fig. 7: eine schematische Anordnung der im Steuergerät zusammengefaßten Elemente,
- Fig. 8: eine Frontansicht einer Ausführungsform eines Steuergeräts mit Anzeige- und Bedienungselementen,
- Fig. 9: einen vergrößerten Querschnitt durch ein Element zur Bildung des Zwischenbodens,
- Fig. 10: eine schematische, perspektivische Ansicht einer Ausführungsform des erfindungsgemäßen Geräts, das ein Vollbad des Hundes ermöglicht und insbesondere auch zur veterinär-medizinischen Anwendung geeignet ist,
- Fig. 11: eine teilweise unterbrochene perspektivische Ansicht einer eine Zahnstange führenden Säule,
- Fig. 12: eine Ansicht von unten eines Zwischenbodens des Geräts nach Fig. 10,
- Fig. 13: einen Detailschnitt nach der Linie XIII-XIII in Fig. 12,
- Fig. 14: einen Detailschnitt nach der Linie XIV-XIV in Fig. 13,
- Fig. 15: einen Vertikalschnitt durch den Eckbereich des Geräts mit einem Spindeltrieb für den Zwischenboden und
- Fig. 16: eine Schnitt nach der Linie XVI-XVI in Fig. 15.

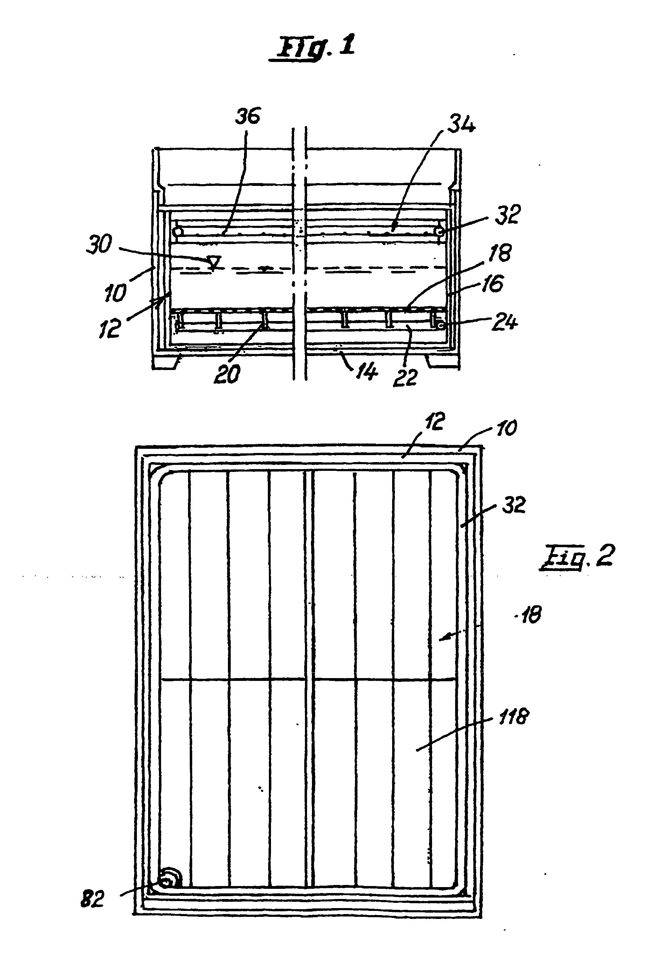

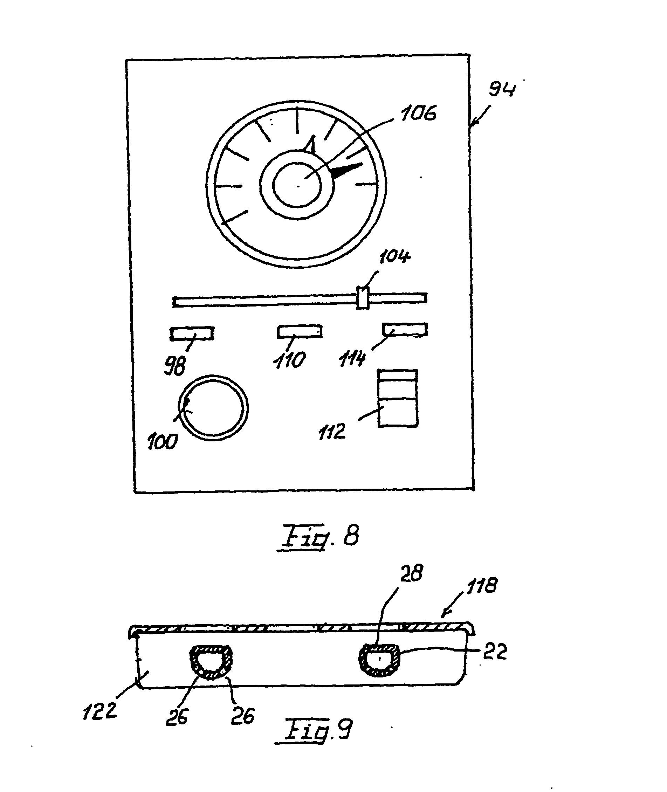

Das erfindungsgemäße Gerät umfaßt in der in Fig. 1 gezeigten Ausführungsform ein wannenartiges Becken 10, in dessen Innerem ein nach oben herausnehmbarer, insgesamt mit 12 bezeichneter Einsatz angeordnet ist, der in seinen wesentlichen Elementen ein auf dem Boden 14 des Beckens 10 aufsitzendes Traggestell 16 aufweist, das in einem Abstand vom Boden 14 einen durchbrochenen Zwischenboden 18 trägt. An seiner Unterseite ist der Zwischenboden 18 mit Halterungen 20 für Luftleitungen 22 versehen, die zu einem ersten, insgesamt mit 24 bezeichneten Zweig eines nachfolgend noch näher erläuterten Luftversorgungssystems gehören. Wie aus Fig. 9 ersichtlich ist, sind die Leitungen 22 mit nach unten gerichteten ersten Luftaustrittsöffnungen 26 versehen, und zwar vorzugsweise derart, daß sie nach entgegengesetzten Seiten schräg abwärts gerichtet sind. Die Leitungen 22 können jeweils aus einem Kunststoffschlauch bestehen, der vorzugsweise unrund mit einer flachen Basis 28 ausgebildet ist, so daß bei der Montage gewährleistet ist, daß die Austrittsöffnungen 26 wie vorgesehen ausgerichtet sind. Die Halterungen 20 können als Querstege ausgebildet sein, die Öffnungen zum Einziehen der Leitungen 22 aufweisen. Es können beispielsweise aber auch Klemmen zum Einrasten der Leitungen 22 vorgesehen werden.

Bei der Reinigung der Pfoten steht der Hund auf dem Zwischenboden 18 und das Becken 10 ist so weit mit Wassergefüllt, daß die Pfoten bedeckt werden, was beispielsweise durch das Niveau 30 angezeigt ist. Die Leitungen 22 werden durch die Halterungen 20 in einem vertikalen Abstand von der Unterseite des Zwischenbodens 18 gehalten, damit durch die Leitungen 22 die sich im Wasser verteilende und sprudelnd aufsteigende Luft nicht daran gehindert wird, auch im Bereich oberhalb der Leitungen 22 durch den Zwischenboden 18 nach oben zu dringen. Die Durchbrechungen im Zwischenboden 18 müssen einerseits Hunden unterschiedlicher Größe einen sicheren Stand ermöglichen, andererseits sollen sie eine möglichst gleichmäßige Luftverteilung gestatten.

Mit vertikalem Abstand ist oberhalb der Bodenfläche des Zwischenbodens 18 am Traggestell 16 ein rahmenartiger, horizontal und parallel zu den Seitenwänden des Bekkens 10 verlaufender Abschnitt einer Luftleitung 32 angebracht, die einem zweiten Zweig 34 des Luftversorgungssystems zugeordnet ist. Der rahmenartige Abschnitt ist mit schräg nach unten einwärts gerichteten, zweiten Luftaustrittsöffnungen 36 versehen. Damit der aus den Luftaustrittsöffnungen 36 austretende Luftstrom eine optimale Wirkung erzielt, ist der rahmenartige Abschnitt in vertikaler Richtung einstellbar am Einsatz 12 gelagert, damit er der jeweiligen Körpergröße des zu reinigenden Hundes angepaßt werden kann.

Nachdem der Hund sich auf dem Zwischenboden 18 befindet und der gewünschte Wasserstand vorhanden ist, wird aus dem Luftversorgungssystem über die Leitungen 22 und die ersten Luftaustrittsöffnungen 26 Luft in das Wasser eingeblasen, die sich verteilt und sprudelnd nach oben steigt und dabei den an den Pfoten anhaftenden Schmutz löst. Nach maximal 1 Minute ist die Reinigungsphase beendet. Das Wasser wird aus dem Becken 10 entfernt. Beim Absinken des Wasserstands bleibt der Druck im ersten Zweig 24 erhalten, um das Eindringen von Schmutz in die Luftaustrittsöffnungen 26 zu verhindern.

Ist das Wasser entleert, wird zugleich mit dem ersten Zweig 24 auch der zweite Zweig 34 mit Druckluft versorgt, so daß aus den Luftaustrittsöffnungen 26 die Pfoten von unten mit Trocknungsluft versorgt werden, während die aus den Öffnungen 36 austretende Luft von oben her die Feuchtigkeit nach unten drückt und die Trocknung unterstützt. Nach Abschluß der Trocknungsphase wird das Gerät abgeschaltet.

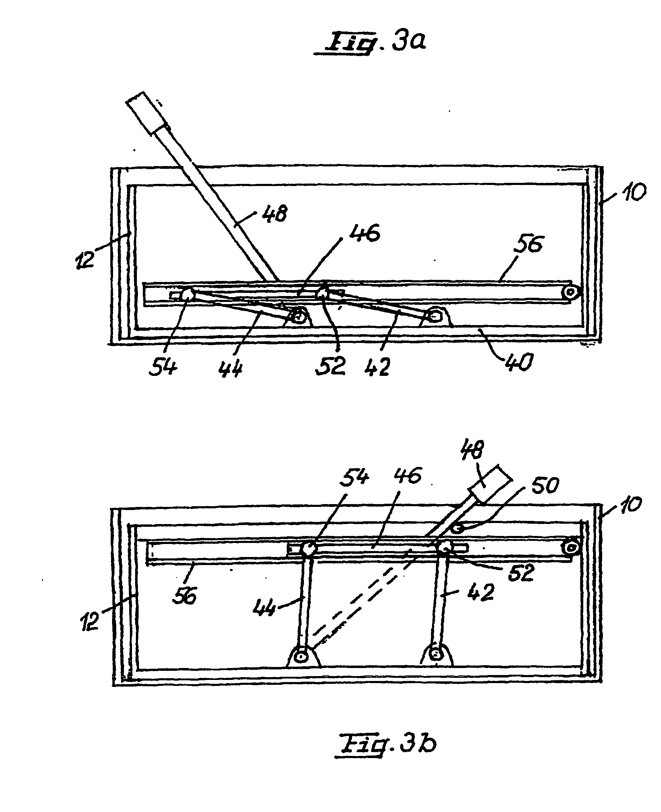

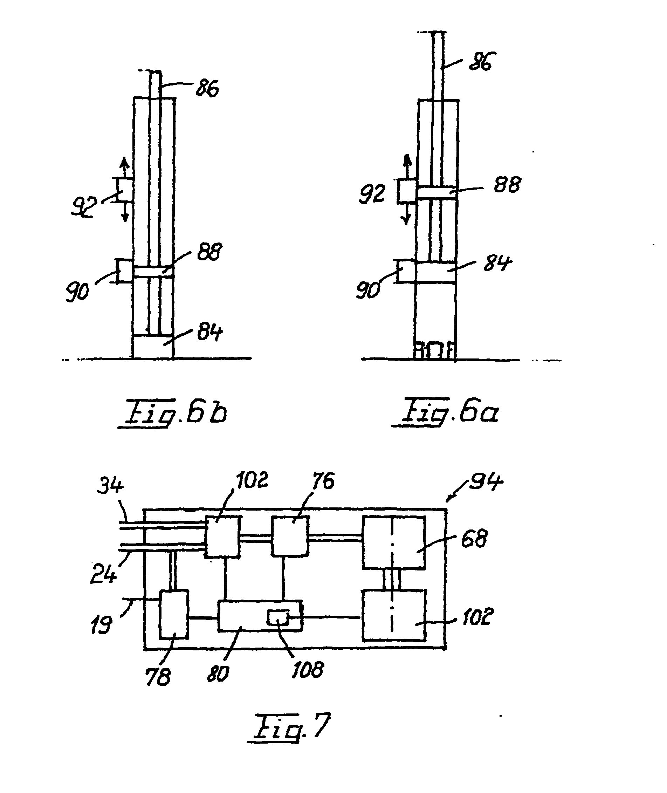

Bei nur geringer Verschmutzung der Pfoten tritt nur eine so geringe Verschmutzung des Wassers ein, daß dies für mehrere aufeinanderfolgende Reinigungen verwendet werden kann. Um eine Verstopfung der Luftaustrittsöffnungen 26 zu verhindern, dürfen diese nicht im Wasser verbleiben, wenn kein Luftdruck in den Leitungen 22 ansteht. Es kann deshalb, wie in den Fig. 2 und 3 schematisch dargestellt, der Zwischenboden 10 mitsamt den Leitungen 22 aus dem Wasser herausgehoben werden, so daß das Wasser bis zur nächsten Reinigung im Becken verbleiben kann. Für die Trocknung wird in diesem Fall der Hund aus dem Becken herausgenommen und mittels eines aus dem zweiten Zweig 34 beaufschlagbaren Luftschlauchs 38 getrocknet, der in Fig. 6 gezeigt ist.

Um den Zwischenboden vertikal bewegen zu können, sind an einem rechteckigen Sockelrahmen 40 des Einsatzes 12, mit einem Abstand in Richtung seiner Längsseiten, zwei parallele Hebelpaare 42 und 44 mit ihren einen Enden um zu den Querseiten parallele horizontale Achsen verschwenkbar gelagert. Die anderen Enden sind an einem Hubrahmen 46 gelenkig angeschlossen, so daß parallel zu den beiden Längsseiten zwei Gelenkparallelogramme gebildet sind. In der unteren Endposition ist der Hubrahmen 46 dem Sockelrahmen 40 benachbart. In dieser Position ragt ein mit dem einen Hebelpaar 44 drehfest verbundener, jedoch winkelversetzter Handhebel 48 derart schräg nach oben, daß er sich nahe der einen Querseite innerhalb des vom oberen Rand des Beckens umgrenzten vertikalen Bereichs befindet. Wird der Handhebel 48 bis zu einem ihm zugeordneten Anschlag 50 am Einsatz 12 verschwenkt, so daß er in der anderen Richtung schräg nach oben ragt, bewegen sich die Hebelpaare 42 und 44 nach oben und überschreiten kurz die obere Totpunktposition, so daß sich schließlich der Hubrahmen 46 in seiner oberen, stabilen Endlage befindet. Dabei hat sich der Hubrahmen 46 in Richtung der Längsseiten verlagert. Der Hubrahmen ist deshalb mit um die Achsen zwischen dem Hubrahmen 46 und den Hebelpaaren 42 und 44 drehbaren Rollenpaaren 52 und 54 versehen, die in als Führungsschienen dienende U-Profile 56 an den beiden Längsseiten des Zwischenbodens 18 eingreifen, so daß sich der Hubrahmen 46 während seiner Vertikalbewegung n Führungsrichtung gegenüber dem Zwischenboden 18 bewegen kann. Damit der Zwischenboden 18 nicht in Führungsrichtung gegen die Wandung des Beckens gedrückt wird und in Vertikalrichtung unter Reibungsschluß daran entlanggleitet, was zu Beschädigungen führen kann, ist der Zwischenboden 18 an einer Querseite mit Stützrollen 58 versehen.

Wie bereits einleitend geschildert wurde, ist es manchmal erwünscht, nicht nur die Pfoten, sondern z.B. auch den Bauch des Hundes zu säubern, weshalb es die Nützlichkeit des Geräts verbessert, wenn durch einen Schlauch Wasser an die verschmutzte Stelle herangeführt werden kann. Schon aus diesem Grund ist es sinnvoll, das Gerät mit einer Pumpe auszustatten, die geeignet ist, aus dem im Gerät vorhandenen Wasser einen Reinigungsstrahl aus einem Schlauch austreten zu lassen, den man von Hand gegen die verschmutzte Stelle richten kann. Damit steht zugleich ein Mittel zur Verfügung, mit dem nach der Reinigungsphase das Becken geleert werden kann. Hierfür kann der Schlauch, gegebenenfalls mittels einer Verlängerung, mit einem geeigneten Wasserablauf verbunden werden, oder es kann das Wasser in einen Behälter abgepumpt werden. Dabei kann es sich auch um einen in das Gerät einbezogenen Sammelbehälter handeln, dem das Wasser für den nächsten Reinigungsvorgang wieder entnommen werden kann, so daß das Wasser mehrfach benutzt werden kann, ohne daß die in den Fig. 2 und 3 gezeigt Vorrichtung zum Heben und Senken des Zwischenbodens erforderlich ist.

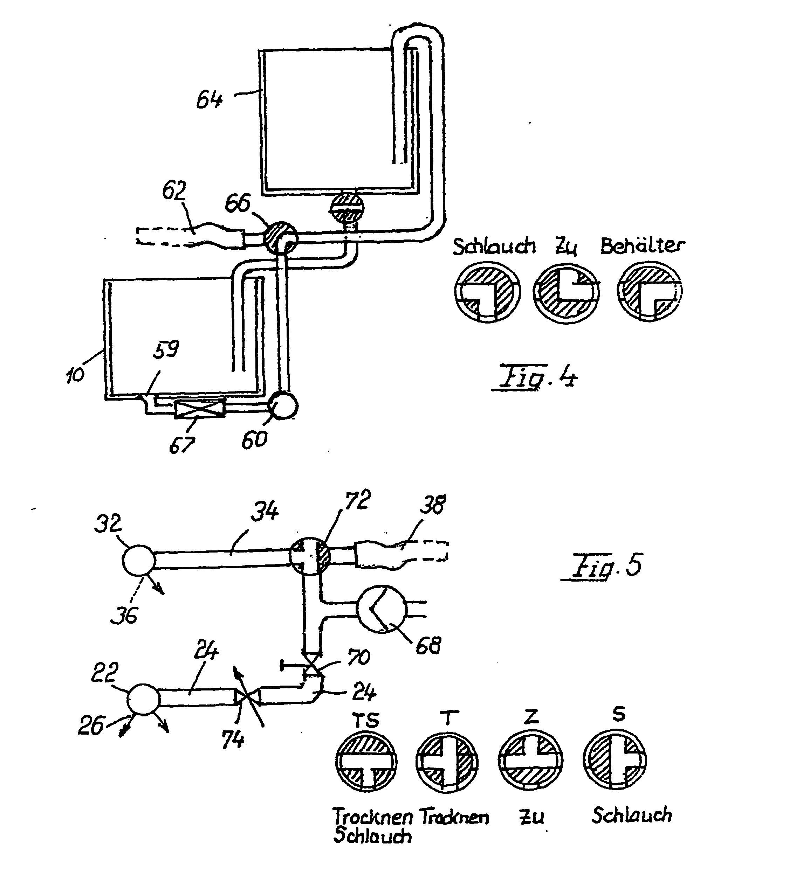

Die Fig. 4 zeigt schematisch eine Schaltung mit einer an eine untere Entleerungsöffnung 59 des Beckens 10 angeschlossenen Pumpe 60, einem zur zusätzlichen Reinigung dienenden Wasserschlauch 62 und einem Sammelbehälter 64, wobei ein umschaltbares Ventil 66 die Druckseite der Pumpe wahlweise mit dem Schlauch oder mit dem Sammelbehälter verbindet oder in einer Mittelstellung absperrt. Der Pumpe 60 ist ein Schmutzfilter 67 vorgeschaltet. Soll das Wasser erneuert werden, kann der Wasserschlauch 62 benutzt werden, um das Wasser aus dem Becken 10 in eine Abwasserleitung zu entleeren.

Damit der Hund leicht in das Becken verbracht werden kann, ist dieses zweckmäßigerweise möglichst in Bodenhöhe positioniert. Damit wird es nur selten möglich sein, einen Sammelbehälter unter dem Becken so anzuordnen, daß das Wasser nach Öffnen eines Schnellentleerungsventils ohne zusätzliches Fördermittel in den Sammelbehälter ablaufen kann. Sollte eine solche Anordnung möglich sein, wäre die Pumpe so zu schalten, daß sie Wasser aus dem Sammelbehälter absaugen und durch das Ventil gesteuert entweder in das Becken oder in den Wasserschlauch fördern kann.

Sofern der Sammelbehälter 64 nicht unterhalb des Beckens 10 positioniert werden kann, ist er zweckmäßigerweise so weit oben anzuordnen, daß das Wasser aus dem Sammelbehälter 64 unter der Wirkung des Gefälles in das Becken abfließen kann, wie dies in Fig. 4 gezeigt ist.

Die Versorgung des Geräts mit Luft für das Sprudelbad wie auch für die Trocknung des Hundes erfolgt durch ein Gebläse 68, dessen Druckseite mit einem ersten Zweig 24 für das Sprudelbad und einem zweiten Zweig 34 für die Trocknung. verbunden ist. Da während der Reinigungsphase die Luft vom Gebläse 68 nur über die ersten Luftaustrittsöffnungen 26 und während der Trocknungsphase über die ersten Luftaustrittsöffnungen 26 und die zweiten Luftaustrittsöffnungen 36 und bei Bedarf zusätzlich auch über den Luftschlauch 38 austreten soll, oder aber - falls sich der zu trocknende Hund außerhalb des Geräts befindet - allein über den Luftschlauch 38, verzweigt sich das Luftversorgungssystem auf der Druckseite des Gebläses und mündet in den ersten Zweig 24 und den zweiten Zweig 34 ein, deren jeder mittels eines Ventils 70 bzw. 72 unabhängig vom anderen geöffnet oder geschlossen werden kann. Um den Druck entsprechend dem je nach Größe des Hundes gegebenenfalls unterschiedlichen Wasserpegel auf einen optimalen Wert einstellen zu können folgt auf das Absperrventil 70 eine verstellbare Drossel 74.

Während das Ventil 70 ein reines Absperrventil ist, das das Sprudelbad zu oder abschaltet, ist das Ventil 72 als Mehrwegeventil ausgebildet, das den zweiten Zweig 34 entweder sperrt oder drei Möglichkeiten bietet, ihn mit Luft zu versorgen. Der zweite Zweig 34 ist geschlossen, wenn das Ventil 72 in einer mittleren Schließstellung Z steht. Dreht man es aus dieser Schließstellung entgegen dem Uhrzeigersinn, erreicht man zunächst eine erste Öffnungsstellung T, in der die Luftleitung 32 mit dem Gebläse 68 verbunden ist. Dreht man das Ventil 72 weiter entgegen dem Uhrzeigersinn, folgt eine zweite Öffnungsstellung TS, in der zusätzlich zur Luftleitung 32 auch der Luftschlauch 38 beaufschlagt wird. Durch eine Drehung aus der Schließstellung Z im Uhrzeigersinn wird eine dritte Öffnungsstellung S erreicht, in der nur der Luftschlauch 38 mit dem Gebläse 68 verbunden ist, sofern das Ventil 70 geschlossen und das Sprudelbad beendet ist. Diese Stellung wird man verwenden, wenn der Hund außerhalb des Beckens getrocknet werden soll. Befindet sich der Hund in der Trocknungsphase außerhalb des Wassers noch auf dem Zwischenboden, kann bei geöffnetem Ventil 70 Trocknungsluft von unten gegen den Hund geblasen werden und zugleich bei Stellung T des Ventils 72 der Hund von oben aus der Leitung 32 angeblasen werden, es kann aber bei Stellung TS auch noch der Schlauch 38 ergänzend eingesetzt werden.

Vorzugsweise ist vor der Verzweigung auf der Druckseite des Gebläses 68 eine Heizung 76 für die geförderte Luft angeordnet, die zugleich mit dem Gebläse ein- und ausgeschaltet wird.

Für die Pfotenpflege der Hunde ist es vorteilhaft, wenn sie nach dem Waschen mit einem Pflegeöl behandelt werden. Es ist deshalb mit der Luftleitung 22 eine Dosiervorrichtung 78 verbunden, wobei die Verbindung in Funktion gesetzt wird, wenn der Trocknungsvorgang durchgeführt wird. Es wird deshalb die Dosiervorrichtung 78 gemeinsam mit dem weiten Zweig 34 zu- und abgeschaltet. Ist sie zugeschaltet, gibt die Dosiervorrichtung 78 eine voreinstellbare Menge eines Zusatzmittels ab, daß durch den Luftstrom von unten gegen die Pfoten geblasen wird.

Wie die Fig. 6 zeigt, ist in der vertikalen Längsmittelebene des Beckens 10 ist über dem Zwischenboden 18 eine am Einsatz 12 befestigte Trennwand 79 angeordnet, die verhindert, daß der in den Becken 10 gestellte Hund sich im Becken umdrehen kann.

Eine insgesamt mit 80 bezeichnete Steuerschaltung ermöglicht einen weitgehend automatischen Ablauf der Reinigungs- und Trocknungsverfahrens. Dafür ist es zweckmäßig, feststellen zu können, ob der vorgegebene Wasserstand im Becken 10 erreicht ist oder ob das Becken geleert ist Im Inneren des Behälters ist ein Füllstandssensor 82 angeordnet, der z.B. aus einem vertikal geführten Schwimmer 84 mit einem Führungsstab 86 bestehen kann. Befindet sich der Schwimmer 84 in seiner tiefsten Stellung, die er nur bei entleertem Becken 10 erreicht, wirkt eine Markierung 88 am Führungsstab mit einem ortsfesten Sensorelement 90 zusammen. Ein vertikal verstellbares Sensorelement 92 dient zur Markierung des gewünschten Füllwasserstandes, der entsprechend der Hundegröße gewählt wird. Beide Sensorelemente 90 und 92 sind mit der Steuerschaltung 80 verbunden, die nicht näher dargestellt ist, nachdem es sich um konventionelle Steuertechnik handelt.

Entsprechend den gestellten Anforderungen kann das Gerät in verschiedenen Ausbaustufen verwendet werden. Soll es beispielsweise in einem privaten Haushalt nur für einen einzigen Hund bestimmter Größe verwendet werden, soll der Aufwand gering gehalten werden und stehen am Einsatzort keine besonderen Möglichkeiten für Wasserver- und -entsorgung zur Verfügung, kann man sich mit einer einfachen Ausführung ohne fest installierte Wasserver- und -entsorgung, ohne automatischen Verfahrensablauf und gegebenenfalls ohne die Möglichkeit der mehrmaligen Verwendung des Reinigungswassers begnügen. Man wird dann etwa die für diesen Hund für eine Reinigung erforderliche Wassermenge in einem Gefäß bereitstellen und vor der Reinigung in das Becken einfüllen, sowie nach der Reinigung das Wasser über eine Ablauföffnung oder mittels der als Zubehör vorhandenen Pumpe in das Gefäß zurückbefördern und dann entsorgen. Wird das Gerät dagegen in einem Hotel oder Mehrfamilienhaus für die Hunde der Gäste bzw. Bewohner benutzt, deren Hunde sehr unterschiedliche Größen aufweisen können, muß die Reinigung mit entsprechend der Hundegröße abgestuften, unterschiedlichen Wassermengen erfolgen. Außerdem sollte den Hundebesitzern insbesondere in einem Hotel außer der Wahl eines auf die Hundegröße abgestimmten Programms möglichst wenig eigene Bemühung abverlangt werden, d.h. das Reinigungs- und Trocknungsverfahren sollte möglichst automatisch ablaufen. Bei einer solchen Anwendung kann man einen festen Platz für das Gerät vorsehen und diesen Platz auch mit einer Frischwasserversorgung und einem Ablauf für Brauchwasser ausstatten und das Gerät an diese anschließen.

Beispielsweise wird anhand der Fig. 8 und 9 angedeutet, welche Ausstattung für eine komfortable Bedienung des Geräts vorgesehen werden kann. Dabei können die elektrischen Funktionseinheiten weitgehend in einem Steuergerät 94 zusammengefaßt werden, das sicher vom Feuchtbereich des Geräts getrennt werden kann. Bei einer einfacheren Ausführung kann das Steuergerät 94 beispielsweise als separate Einheit mit ausreichendem Sicherheitsabstand vom Becken 10 an einer Wand befestigt werden, wobei zwischen dem Becken 10 und dem Steuergerät 94 lediglich an das im Steuergerät befindliche Gebläse 68 angeschlossene, dem ersten Zweig 24 und dem zweiten Zweig 34 zugeordnete Luftschläuche und eine Signalleitung 96 für die Überwachung des Wasserpegels verlaufen.

Anhand der Fig. 7 wird ein leistungsfähigeres Steuergerät 94 beschrieben. Dabei werden die in Fig. 5 gezeigten Ventile 70 und 72 und die Drossel 74 zusammengefaßt als ein Block 102 dargestellt. Sobald der Wasserstand im Becken 10 den Schwimmer 84 soweit angehoben hat, daß die Markierung 88 die Position des Sensorelements 92 erreicht, wird ein Steuersignal ausgelöst und über eine Leitung 19 der Steuerschaltung 80 (Fig. 7) zugeleitet, die eine Diode 98 am Bedienungsfeld des Steuergeräts 94 aktiviert, die durch ihr Aufleuchten anzeigt, daß der Reinigungsvorgang gestartet werden kann.

Wenn man sich überzeugt hat, daß der Hund richtig plaziert ist, kann der Startknopf 100 gedrückt werden. Die Steuerschaltung 80 stellt daraufhin eine Verbindung des Gebläses 68 nur mit dem ersten Zweig 24 der Luftversorgung her und aktiviert dann einen stufenlos regelbaren Motor 103 zum Antrieb des Gebläses 68 in einer Reinigungsstufe. Die Förderleistung des Gebläses 68 in der Reinigungsstufe wird mittels eines Schiebers 104 eingestellt. Sie wird dem - entsprechend dem Körperbau des Hundes - als zweckmäßig erachteten Wasserstand derart angepaßt, daß die über die Luftleitung 22 geförderte und durch die Luftaustrittsöffnungen 26 austretende Luft ein Sprudeln ohne Spritzen erzeugt. Über einen Drehknopf 106 kann vorab die gewünschte Reinigungszeit und gegebenenfalls auch die gewünschte Trocknungszeit eingestellt werden, die von einem Zeitschaltglied 108 überwacht werden. Auch diese Einstellungen können elektronisch ausgehend vom festgestellten tatsächlichen Pegelstand automatisch vorgenommen werden.

Es ist aber auch möglich, im Steuergerät mehrere fest programmierte, auf unterschiedliche Hundegrößen zugeschnittene Betriebsabläufe vorzusehen, wobei jeder Stufe ein bestimmter Wasserstand und eine bestimmte Gebläseleistung zugeordnet wird. Gegebenenfalls kann auch die Reinigungs- und/oder Trocknungszeit fest vorgegeben werden. Es wird dann das Bedienungsfeld Tasten zur Auswahl des jeweiligen Reinigungsprogramms aufweisen. Es kann auch eine Wahlmöglichkeit zwischen programmiertem Betrieb und individueller Einstellung vorgesehen werden.

Nach Ablauf der Reinigungszeit wird der Luftdruck in der Leitung 22 mittels der Drossel 74 abgesenkt oder die Gebläseleistung entsprechend abgesenkt und dann die Entleerung des Reinigungsbehälters durch Öffnung eines Ablaufventils oder Abpumpen durchgeführt.

Durch die Entleerung des Beckens 10 sinkt der Schwimmer soweit ab, daß das Sensorelement 90 aktiviert wird, wodurch das Ventil 72 umgestellt wird, damit das Gebläse 68 nun mit beiden Luftzuführleitungen 22 und 32 in Verbindung steht. Die Förderleistung des Gebläses wird auf den Maximalwert erhöht und die Heizeinrichtung 76 wird eingeschaltet.

Nach Ablauf der Trocknungszeit werden das Gebläse 68 und die Heizeinrichtung 76 abgeschaltet, das Ventil 72 wird geschlossen und gegebenenfalls kann durch das Aufleuchten einer Diode 110 angezeigt werden, daß der Reinigungsvorgang beendet ist.

Um das Gerät vom Netz zu trennen kann ein Ein-Aus-Schalter 112 vorgesehen werden und eine Diode 114 kann anzeigen, daß das Gerät unter Spannung steht.

Um die Fertigung unterschiedlicher Größen von Geräten zu vereinfachen, kann der Zwischenboden 18 durch das Aneinanderfügen einer größeren oder kleineren Anzahl von Bodenelementen 118 (Fig. 6) gebildet werden. Diese Elemente weisen einen durchbrochenen Deckstreifen 120 auf, an dessen Unterseite in Längsrichtung der .Elemente 118 mehrere Halterungen, etwa in Form von Querstegen 122 vorgesehen sind, in die nach Montage der Elemente 118 in einem der Form des Zwischenbodens 18 entsprechenden Rahmen die Leitungen 22 eingelegt werden können.

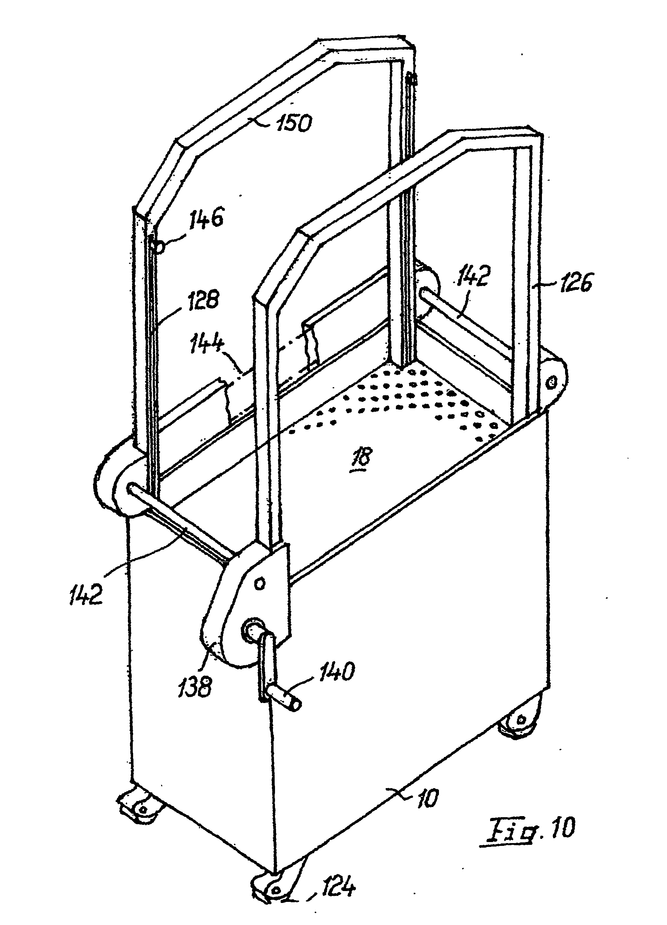

Die Fig. 10 bis 13 zeigen ein Gerät zur Durchführung des erfindungsgemäßen Verfahrens, wie es insbesondere im veterinärmedizinischen Bereich vorteilhaft ist. Dort geht es nicht darum, womöglich mehrmals täglich, die Pfoten eines Hundes zu reinigen, sondern darum, mit möglichst geringem Aufwand an Zeit und Arbeit Hunden unterschiedlichster Größe ein Vollbad zu verabreichen, durch das nicht nur eine gründliche Reinigung erfolgt, sondern gegebenenfalls auch durch ein dichtes Fell hindurch Medikamente oder Pflegemittel an die Haut herangebracht werden. Dies läßt sich durch ein Sprudelbad ideal erreichen, wobei gemäß der Erfindung ein Sprudelbad möglich ist, ohne die umfangreichen Vor- und Nacharbeiten durchführen zu müssen, die derzeit ein Sprudelbad höchst unwirtschaftlich machen.

Das Gerät nach Fig. 10 besitzt ein Becken 10, das auf die maximale Hundegröße abgestimmt ist. Durch schwenkbare Laufrollen 124 ist es leicht beweglich. Durch eine Feststellbremse 125 kann das Gerät an der gewählten Position festgehalten werden.

An der Innenseite der vier Ecken des Beckens 10 sind vertikale Säulen 126 aus im Querschnitt rechteckigen Hohlprofilen angeordnet, die jeweils durch einen vertikalen Schlitz 128 an einer Seitenfläche 130 geöffnet sind und die einander paarweise derart zugeordnet sind, daß bei jedem dieser beiden Säulenpaare die geöffneten Seitenflächen 130 einander zugewandt sind. Vorzugsweise liegen die Säulen 126 eines Paares sich an den kurzen Seiten des Beckens 10 gegenüber. Im Inneren jeder Säule 126 ist in vertikaler Richtung verschieblich eine Zahnstange 132 (Fig. 11) geführt, wobei zur leichten Beweglichkeit nicht dargestellte Polyamid-Gleitplatten im Führungsbereich vorgesehen sind. Die Zahnstangen 132 sind so angeordnet, daß eine ihrer Flanken hinter dem Schlitz 128 liegt. Die Zahnstangen 132 eines Paars sind jeweils durch einen die Schlitze 128 durchquerenden, horizontalen Stab 134 (Fig. 11) verbunden. Der Zwischenboden 18 ist an seinen entsprechenden, parallelen Rändern mit jeweils einem sich nach unten U-förmig öffnenden Profil 136 (Fig. 13) versehen, das geeignet ist, die Stäbe 134 zu übergreifen, so daß der Zwischenboden 18 entsprechend der Bewegung der Zahnstangen 132 abgesenkt und angehoben und gegebenenfalls zu Reinigungsarbeiten von den Stäben 134 abgehoben werden kann.

Um die Zahnstangen 132 zu bewegen, ist einer der Säulen 126 ein insgesamt mit 138 bezeichneter, im Detail nicht näher dargestellter Antrieb zugeordnet Antrieb zugeordnet, der mit einem Ritzel durch eine hierfür in der Säule 126 vorgesehene Öffnung in die betreffende Zahnstange 132 eingreift. Zur Betätigung des Antriebs 138 kann eine Handkurbel 140 dienen, es ist aber auch ein motorischer Antrieb möglich. In Anbetracht der bei großen Hunden zu bewegenden Last von etwa 80 kg ist eine Untersetzung von beispielsweise 1:3 zwischen Handkurbel 142 und Ritzel 140 empfehlenswert. Um die Zahnstangen 132 völlig synchron zu bewegen, ist jeder Zahnstange 132 ein Ritzel zugeordnet, wobei ein zwangsweiser Gleichlauf dieser Ritzel vorgesehen ist. Es können etwa die Ritzel eines Säulenpaars durch eine gemeinsame Welle 142 und diese Wellen 142 durch einen Kettentrieb 144 verbunden sein. Die Wellen liegen jeweils außerhalb des Beckenrandes, greifen also von entgegengesetzten Seiten in die Säulen ein, weshalb der Kettentrieb zur Umkehr der Drehrichtung ein nicht gezeigtes Zwischenrad enthält.

Der Handkurbel 140 muß eine Rücklaufsperre zugeordnet werden, damit der angehobene Zwischenboden durch sein Gewicht und seine Last nicht nach unten sinken kann.

Am oberen Ende der Zahnstangen 132 kann jeweils eine durch den Schlitz 128 nach außen ragende Halterung 146 vorgesehen sein, an der ein Spritzschutz 148 befestigt werden kann, etwa ein Vorhang oder eine Abschirmung aus Acrylglas, der beim Hochfahren des Zwischenbodens mit nach oben gezogen wird und das Spritzwasser auffängt, wenn sich der Hund beim Verlassen des Beckens 10 schüttelt.

Die Säulen 126 können an den oberen Enden durch gegebenenfalls abnehmbare, horizontal parallel zu den Beckenlängsseiten verlaufende Balken 150 verbunden sein. Die Balken können eine Konsole trage, auf der gegebenenfalls Zusatzaggregate, wie Pumpe, Gebläse und Steuerung angeordnet werden können.

An einer der Säulen 126 ist der Zahnstange 132 ein Endschalter zugeordnet, der gewährleistet, daß der Luftzutritt in den ersten Zweig 24 des Luftversorgungssystems geöffnet wird, bevor der Zwischenboden 18 in die im Becken befindliche Flüssigkeit eintaucht, so daß jederzeit ausgeschlossen ist, daß sich Schmutz-partikel in den Luftaustrittsöffnungen festsetzen können.

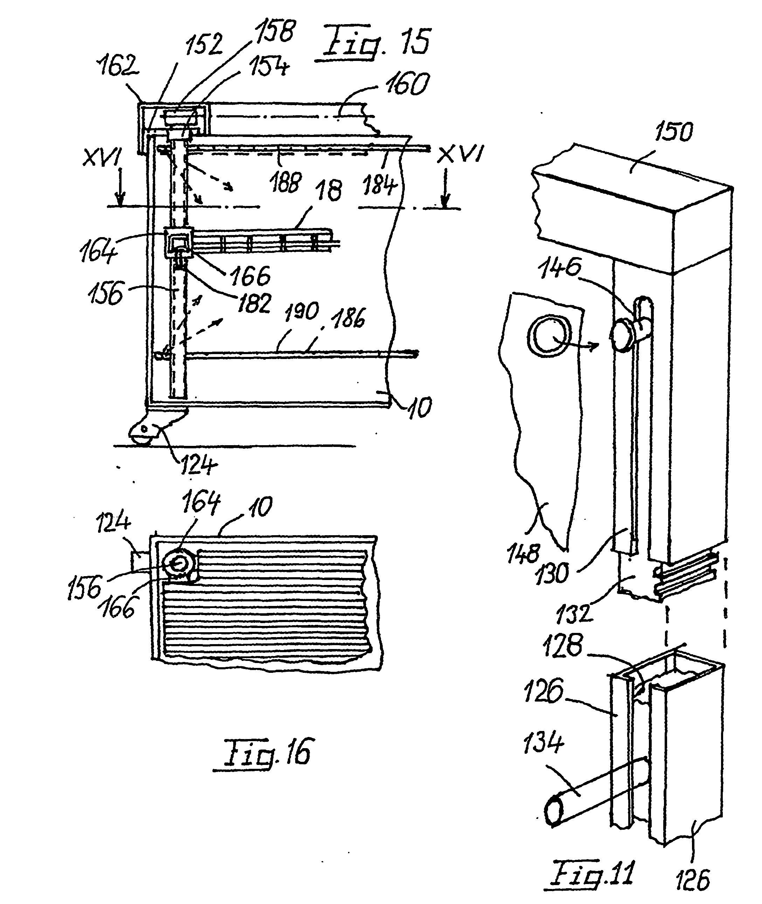

Sofern die nach oben ragenden Säulen 126 als störend empfunden werden, kann statt des mit Zahnstangen 132 ausgerüsteten Hubantriebs auch die in Fig. 15 und 16 dargestellte Version verwendet werden. Am oberen Rand des Beckens 10 befindet sich ein Rahmen 152, der in den Eckbereichen jeweils ein Lager 154, in dem drehbare eine gerollte Gewindespindel 156 gelagert ist. Solche Spindeln mit eingewalztem Gewinde sind relativ preiswert. Durch eine eingefräste Längnut können sie selbstreinigend ausgebildet werden, so daß der Spindeltrieb auch im Schmutzwasser betriebsbereit bleibt.

Oberhalb des Rahmens 152 ist drehfest mit jeder Spindel 156 ein Kettenrad 158 verbunden, wobei die Kettenräder 158 und ein nicht gezeigter, ebenfalls mit einem Kettenrad versehener Antrieb durch eine endlose Kette 160 verbunden sind. Kettenräder 158 und Kette 150 werden durch eine den oberen Beckenrand übergreifende Abdeckhaube 162 abgedeckt. Die Spindeln 156 greifen in Muttern 164 ein, die in einen Rahmen 166 eingebunden sind, der den Zwischenboden 18 trägt. Durch Drehung der Spindeln 156 kann der Zwischenboden gehoben und abgesenkt werden.

Es ist vorteilhaft, wenn eine Vorkehrung getroffen ist, die es gestattet, die vertikale Position des Zwischenbodens 18 abzulesen. Es kann beispielsweise einer mit dem Zwischenboden 18 auf und ab bewegliche Markierung an der Beckeninnenseite eine Skalaangebracht sein, die es ermöglicht, die Position eines etwa an einem der Stäbe 134 oder dem Rahmen 166 angebrachten Sensors 182 abgelesen werden kann. Dieser Sensor 160 veranlaßt das Schließen eines im Wasserzulauf zum Becken 10 angeordneten Sperrventils, sobald ihn das im Becken steigende Wasser erreicht. Der Wasserzulauf erfordert deshalb keine ständige Überwachung beim Füllen des Beckens 10. Das Sperrventil verbleibt in seiner Sperrstellung, bis es von einer Bedienungsperson geöffnet wird, um den Wasserzufluß zum Becken 10 wieder zu ermöglichen. Dadurch wird verhindert, daß der Wasserzulauf sich automatisch wieder öffnet, wenn der Zwischenboden 18 angehoben wird, um in seiner obersten Position den Hund aufzunehmen und ihn dann für das Bad in die unterste Position zu überführen.

In Fig. 15 sind zwei ringförmige Leitungen 184 und 186 zu sehen, die mit unter Druck stehendem Wasser beaufschlagt werden können, so daß aus der oberen Leitung 184 durch Sprühöffnungen 188 schräg abwärts gerichtete Wasserstrahlen und aus der unteren Leitung 186 durch Sprühöffnungen 190 schräg aufwärts gerichtete Wasserstrahlen austreten können, durch der im Becken 10 befindliche Hund bei Bedarf abgeduscht werden kann.

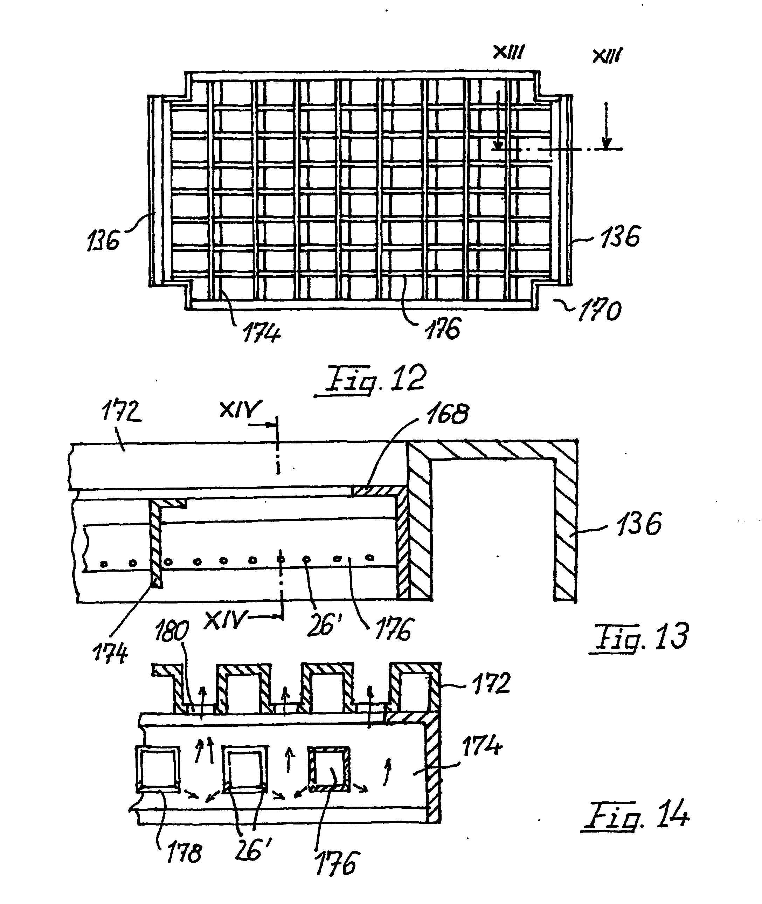

Der Zwischenboden 18 für die Ausführungsformen nach den Fig. 10 und 15 ist in Fig. 12 näher dargestellt. Er besitzt einen Rahmen 168 mit Eckaussparungen 170 für die Säulen126 bzw. die Spindeln 156. Der Rahmen ist an beiden Schmalseiten mit den U-Profilen 136 versehen. Er wird bedeckt von einem Boden 172 (Fig. 13, 14), an dessen Unterseite quer verlaufende Leisten 174 Luftführungskanäle 176 tragen. Diese Kanäle 176 haben einen etwa quadratischen Querschnitt und die Luftaustrittsöffnungen 26' befinden sich unmittelbar oberhalb des Bodens 178 des Kanals 176 an beiden Längsseiten, so daß einerseits die Luft seitlich ausgeblasen wird, was einen besonders guten Verwirbelungseffekt ergibt und zugleich einen Schutz der Öffnungen vor absinkenden Schwebstoffen bietet, außerdem ermöglicht es diese Anordnung, daß beim Herausheben des Zwischenbodens 18 aus dem Wasser das etwa in den Kanal 176 eingedrungene Wasser nach unten abfließen kann, was durch die Gebläseluft unterstützt wird. Damit große und kleine Hunde gleichermaßen einen sicheren Stand auf dem Zwischenboden 18 haben und durch ihre Pfoten das Aufsteigen des sprudelnden Wassers nicht behindern, wird vorzugsweise der Zwischenboden 18 mit einer oberen Deckplanke 172 aus gewelltem Material versehen, dessen Wellen im Querschnitt annähernd rechteckig gestaltet sind, wobei auf dem Grund der Wellen Durchbrechungen 180 für den Luftdurchtritt ausgebildet sind, während der Hund auf der Scheitelfläche der Wellen steht und dadurch einen Abstand von den Durchbrechungen 164 einhält.

Versuche haben gezeigt, daß sich auch ein Lochblech mit einem Lochdurchmesser von maximal 3,5 mm bestens für die Gestaltung der Oberseite des Zwischenbodens eignet, weil einerseits keine Gefahr besteht, daß die Hunde mit ihren Krallen in den Durchbrechubgen hängen bleiben und weil andererseits die große Zahl der dadurch ermöglichten, im Querschnitt aber begrenzten Öffnungen eine sehr gleichmäßige Verteilung der Sprudelwirkung befördert, das Spritzen jedoch verhindert, so daß besondere Vorkehrungen zur Druckregelung der Gebläseluft je nach Höhe des Wasserstandstands nicht erforderlich sind.

Zumindest die veterinärmedizinische Ausführungsform des Geräts wird vorzugsweise aus Edelstahl gefertigt.

## Patentansprüche

1. Gerät zur Pflege, insbesondere Reinigung, von Hunden mit einem wannenartigen Becken (10), das einen Boden (14) und eine sich von diesem Boden (14) nach oben erstreckende Seitenwandung aufweist, und mit einem innerhalb des vom Becken (10) umschlossenen Raums mit einem vertikalen Abstand vom Beckenboden (14) angeordneten, durchbrochenen Zwischenboden (18), **dadurch gekennzeichnet, dass** unterhalb des Zwischenbodens (18) ein erster Zweig (24) eines mit einem steuerbaren Gebläse (68) verbundenen Luftversorgungssystems angeordnet ist, das mit gleichmäßig über die Grundfläche verteilten, seitwärts und/oder abwärts gerichteten Luftaustrittsöffnungen (26) versehen ist.

2. Gerät nach Anspruch 1, **dadurch gekennzeichnet, dass** das Luftversorgungssystem in einer horizontalen Ebene verlaufende Kanäle mit nach beiden Seiten ausmündenden Luftaustrittsöffnungen (26) umfasst.

3. Gerät nach Ansprüchen 1 oder 2, **dadurch gekennzeichnet, dass** ein von Hand führbarer Wasserschlauch (62) vorgesehen ist, der über einen Schmutzfilter (67) und eine zu- und abschaltbare Förderpumpe (60) aus dem im Gerät befindlichen Reinigungswasser mit Spülwasser versorgbar ist.

4. Gerät nach einem der vorhergehenden Ansprüche, **dadurch gekennzeichnet, dass** dem Gebläse (58) eine Heizvorrichtung (76) zur Erwärmung der geförderten Luft nachgeschaltet ist.

5. Gerät nach einem der vorhergegangenen Ansprüche, **dadurch gekennzeichnet, dass** mit dem Gebläse (68) ein zweiter, gesondert zu- und abschaltbarer Zweig (34) des Luftversorgungssystems verbunden ist, der im oberen Bereich der Innenseite der Seitenwandung des Beckens (10) angeordnete, schräg abwärts gerichtete, zweite Luftausströmöffnungen (36) aufweist, wobei der die zweite Luftaustrittsöffnung (36) aufweisende Abschnitt des zweiten Zweigs (34) des Luftversorgungssystems höhenverstellbar angeordnet ist.

6. Gerät nach Anspruch 5, **dadurch gekennzeichnet, dass** der zweite Zweig (34) einen von Hand führbaren, wahlweise mit Luft beaufschlagbaren Luftschlauch (38) aufweist.

7. Gerät nach einem der vorhergehenden Ansprüche, **dadurch gekennzeichnet, dass** mit dem ersten Zweig (24) des Luftversorgungssystems eine Dosiervorrichtung (78) zur Abgabe eines Zusatzmittels in die Luftströmung verbunden ist.

8. Gerät nach einem der vorhergehenden Ansprüche, **dadurch gekennzeichnet, dass** dem Zwischenboden (18) eine Hubvorrichtung (42, 44, 46, 48) zugeordnet ist, die geeignet ist, den Zwischenboden aus seiner einer Reinigungsphase zugeordneten Grundstellung in eine einer Trockenphase zugeordneten Stellung anzuheben und dort zeitweilig festzuhalten.

9. Gerät nach einem der vorhergehenden Ansprüche, **dadurch gekennzeichnet, dass** es mit einem Füllstandssensor (82) versehen ist, der geeignet ist, beim Erreichen einer einstellbaren maximalen Füllhöhe im Becken (10) ein erstes Signal und nach dem Verlassen dieser maximalen Füllhöhe ein zweites Signal abzugeben, sobald der entleerte Zustand des Beckens (10) erreicht ist, wobei der Füllstandssensor (82) zur Signalübertragung mit einer Steuerschaltung (80) verbunden ist, die geeignet ist, entsprechend den vom Füllstandssensor (82) und von einem einstellbaren Zeitschaltglied (108) erhaltenen Signalen zumindest das Gebläse (68), gegebenenfalls die Heizung (76), die Dauer der Reinigungs- und der Trockenphase und gegebenenfalls die Funktion der Förderpumpe (60) zur Befüllung bzw. Entleerung des Beckens (10) zu steuern.

10. Gerät nach einem der vorhergehenden Ansprüche, **dadurch gekennzeichnet, dass** der erste Zweig (24) des Luftversorgungssystems mit einem Abstand von dessen Unterseite mit dem Zwischenboden (18) verbunden ist.

11. Gerät nach einem der vorhergehenden Ansprüche, **dadurch gekennzeichnet, dass** in dem im Grundriss im Wesentlichen rechteckigen Becken (10) in den vier Ecken durch eine zentrale Antriebsvorrichtung (138) synchron vertikal auf und ab bewegliche Hubelemente (132, 134; 164, 166) für den Zwischenboden (18) angeordnet sind.

12. Gerät nach einem der vorhergehenden Ansprüche, **dadurch gekennzeichnet, dass** der Zwischenboden (18) mit dem ihm zugeordneten, die Luftaustrittsöffnungen (26) aufweisenden Teil (22) des Luftversorgungssystems und gegebenenfalls mit einer seiner Vertikalbewegung dienenden Hubvorrichtung (42, 44, 46, 48) als herausnehmbare Einheit (12) im Becken (10) angeordnet ist.

## Claims

1. A device for caring for, especially cleaning dogs, comprising a tub-like basin (10) having a bottom (14) and a side wall extending upwards from this bottom (14) and comprising a perforated intermediate bottom (18) arranged inside the space enclosed by the basin (10) at a vertical distance from the basin bottom (14), **characterised in that** underneath the intermediate bottom (18) there is arranged a first branch (24) of an air supply system connected to a controllable blower (68) which is provided with air outlet openings (26) distributed uniformly over the base surface, which are directly laterally and/or downwards.

2. The device according to claim 1, **characterised in that** the air supply system comprises channels running in a horizontal plane with air outlet openings (26) opening to both sides.

3. The device according to claim 1 or 2, **characterised in that** a manually guidable water hose (62) is provided which can be supplied with rinsing water from the cleaning water located in the device via a dirt filter (67) and a feed pump (60) which can be switched on and off.

4. The device according to any one of the preceding claims, **characterised in that** a heating device (76) for heating the conveyed air is incorporated after the blower (58).

5. The device according to any one of the preceding claims, **characterised in that** a second branch (34) of the air supply system which can be switched on and off separately is connected to the blower (68), and
has obliquely downwardly directed second air outlet openings (36) arranged in the upper region of the inside of the side wall of the basin (10), wherein
the section of the second branch (34) of the air supply system having the second air outlet openings (36) is arranged such that it is adjustable in height.

6. The device according to claim 5, **characterised in that** the second branch (34) has a manually guidable air hose (38) which can be acted upon with air as desired.

7. The device according to any one of the preceding claims, **characterised in that** a metering device (78) to deliver an additive into the air flow is connected to the first branch (24) of the air supply system.

8. The device according to any one of the preceding claims, **characterised in that** the intermediate bottom (18) is assigned a lifting device (42, 44, 46, 48) which is suitable for lifting the intermediate bottom from its base position associated with a cleaning phase into a position associated with a drying phase and keeping it there for a while.

9. The device according to any one of the preceding claims, **characterised in that** it is provided with a level sensor (82) which is suitable for emitting a first signal when an adjustable maximum filling height is reached in the basin (10) and emitting a second signal after leaving this maximum filling height as soon as the emptied state of the basin (10) is reached, wherein
for signal transmission the level sensor (82) is connected to a control circuit (80) which is suitable for controlling at least the blower (68), possibly the heating (76), the duration of the cleaning and drying phase and possibly the function of the feed pump (60) for filling or emptying the basin (10) according to signals obtained from the level sensor (82) and from an adjustable time switch member (108).

10. The device according to any one of the preceding claims, **characterised in that** the first branch (24) of the air supply system is connected to the intermediate bottom (18) at a distance from its underside.

11. The device according to any one of the preceding claims, **characterised in that** lifting elements (132, 134; 164, 166) for the intermediate floor (18) which can be moved synchronously vertically up and down by a central drive device (138) are arranged in the substantially rectangular basin (10) in plan view, in the four corners.

12. The device according to any one of the preceding claims, **characterised in that** the intermediate bottom (18) with the part (22) of the air supply system having the air outlet openings (26) associated with it and possibly with a lifting device (42, 44, 46, 48) used for its vertical motion is arranged as a removable unit (12) in the basin (10).

## Revendications

1. Appareil pour les soins, en particulier pour la toilette, de chiens, comprenant un bassin (10) en forme de cuvette qui comprend un fond (14) et une paroi latérale s'étendant depuis ce fond (14) vers le haut, et comprenant un fond intermédiaire (18) interrompu, agencé à distance verticale depuis le fond (14) du bassin dans l'espace enfermé par le bassin (10), **caractérisé en ce qu'**une première ramification (24) d'un système d'alimentation d'air, reliée à une soufflante (68) susceptible d'être commandée, est agencée au-dessous du fond intermédiaire (18), ledit système étant pourvu d'ouvertures de sortie d'air (26) réparties régulièrement sur la surface de base et orientées vers le côté et/ou vers le bas.

2. Appareil selon la revendication 1, **caractérisé en ce que** le système d'alimentation d'air comprend des canaux qui s'étendent dans un plan horizontal, avec des ouvertures de sortie d'air (26) débouchant des deux côtés.

3. Appareil selon l'une ou l'autre des revendications 1 et 2, **caractérisé en ce qu'**il est prévu un tuyau à eau (62) susceptible d'être manipulé à la main, qui peut être alimenté en eau de lavage via un filtre anti-saletés (67) et une pompe de convoyage (60) commutable, à partir de l'eau de nettoyage qui se trouve dans l'appareil.

4. Appareil selon l'une des revendications précédentes, **caractérisé en ce qu'**un dispositif de chauffage (76) destiné à réchauffer l'air convoyé est agencé en aval de la soufflante (58).

5. Appareil selon l'une des revendications précédentes, **caractérisé en ce qu'**une seconde ramification (34), susceptible d'être mise individuellement en circuit et hors circuit, du système d'alimentation d'air est reliée à la soufflante (68), ledit second branchement comportant des ouvertures de sortie d'air (36) agencées dans la zone supérieure de la face intérieure de la paroi latérale du bassin (10) et orientées en oblique vers le bas, et **en ce que** le tronçon de la seconde ramification (34), qui comporte les secondes ouvertures de sortie d'air (36), du système d'alimentation d'air est agencé réglable en hauteur.

6. Appareil selon la revendication 5, **caractérisé en ce que** la seconde ramification (34) comprend un tuyau à air (38) susceptible d'être manipulé à la main et d'être alimenté sélectivement avec de l'air.

7. Appareil selon l'une des revendications précédentes, **caractérisé en ce qu'**un dispositif de dosage (78) destiné à injecter un produit additif dans l'écoulement d'air est relié à la première ramification (24) du système d'alimentation d'air.

8. Appareil selon l'une des revendications précédentes, **caractérisé en ce qu'**un dispositif de levage (42, 44, 46, 48) est associé au fond intermédiaire (18), ledit dispositif de levage étant approprié pour soulever le fond intermédiaire à partir de sa position de base associée à une phase de nettoyage, jusque dans une position associée à une phase de séchage, et de l'y maintenir temporairement.

9. Appareil selon l'une des revendications précédentes, **caractérisé en ce qu'**il est pourvu d'un capteur de niveau de remplissage (82) qui est destiné à délivrer un premier signal lorsqu'on atteint une hauteur de remplissage maximale réglable dans le bassin (10), et après avoir quitté cette hauteur de remplissage maximale, à délivrer un second signal dès que l'on a atteint la situation vidée du bassin (10), ledit capteur de niveau de remplissage (82) étant relié, pour la transmission des signaux, à un circuit de commande (80) qui est destiné, en correspondance des signaux obtenus depuis le capteur de niveau de remplissage (82) et depuis un circuit de temporisation réglable (108), à commander au moins la soufflante (68), le cas échéant le chauffage (76), la durée de la phase de nettoyage et de la phase de séchage, et le cas échéant la fonction de la pompe de convoyage (60) pour le remplissage ou le vidage du bassin (10).

10. Appareil selon l'une des revendications précédentes, **caractérisé en ce que** la première ramification (24) du système d'alimentation d'air est reliée au fond intermédiaire (18) à distance depuis sa face inférieure.

11. Appareil selon l'une des revendications précédentes, **caractérisé en ce que** des éléments de levage (132, 134 ; 164, 166) pour le fond intermédiaire (18), déplaçables de façon synchrone verticalement vers le haut et vers le bas au moyen d'un dispositif d'entraînement central (138), sont agencés dans les quatre coins du bassin (10), présentant essentiellement un contour de base rectangulaire.

12. Appareil selon l'une des revendications précédentes, **caractérisé en ce que** le fond intermédiaire (18), conjointement avec la partie (22) du système d'alimentation d'air qui lui est associée et qui présente les ouvertures de sortie d'air (26), et le cas échéant avec un dispositif de levage (42, 44, 46, 48) servant à son mouvement vertical, est agencé dans le bassin (10) sous forme d'une unité amovible (12).
